# NEUE EUROPÄISCHE PATENTSCHRIFT

(11) **EP 0 987 127 B2**
(45) Veröffentlichungstag und Bekanntmachung des Hinweises auf die Entscheidung über den Einspruch: **07.05.2008**
(45) Hinweis auf die Patenterteilung: 17.03.2004
(21) Anmeldenummer: 99116111.8
(22) Anmeldetag: 17.08.1999
(51) Int. Cl.: B60B 15/00

(54) **Gleitschutzvorrichtung, insbesondere für luftbereifte Fahrzeugräder auf Eis- und Schneeflächen**
Anti-skid device, especially for pneumatic vehicle wheels on surfaces covered with ice and snow
Dispositif antidérapant, en particulier pour pneumatiques de voitures sur surfaces verglacées ou enneigées

(30) Priorität: 15.09.1998 DE 29816502 U; 16.06.1999 DE 29910533 U; 16.06.1999 DE 29910534 U; 30.07.1999 DE 29913258 U
(43) Veröffentlichungstag der Anmeldung: 22.03.2000
(60) Teilanmeldung: 03022022.2
(73) Patentinhaber: Confon AG, CH-9424 Rheineck (CH)
(72) Erfinder: Preusker, Werner, 88605 Sauldorf (DE)
(74) Vertreter: Gachnang, Hans Rudolf

(56) Entgegenhaltungen:
- EP-A- 0 554 531
- EP-A- 0 745 494
- CA-A- 2 177 091
- CA-A- 2 190 218
- FR-A- 1 368 348
- JP-A- 50 078 007
- US-A- 3 283 797

## Beschreibung

Die Erfindung betrifft eine Gleitschutzvorrichtung, insbesondere für luftbereifte Fahrzeugräder auf Eis- und Schneeflächen gemäß dem Oberbegriff des Anspruches 1.

Eine solche Gleitschutzvorrichtung ist durch die im Oberbegriff berücksichtigte US-A-32 83 797 bekannt. Diese Gleitschutzvorrichtung besteht aus einem außerhalb des Mittelpunktes des Rades angeordneten stabförmigen Trägerelement, das von drei gleich langen armartigen Abschnitten gebildet wird, die an den Enden des mittleren armartigen Abschnittes vermittels Drehlager derart verschwenkbar angeordnet sind, dass die beiden seitlichen armartigen Abschnitte um ihre Drehlager verschwenkt werden können, bis die freien Enden der beiden seitlichen armartigen Abschnitte zur Anlage gebracht sind; in dieser Stellung werden diese armartigen Abschnitte mit ihren Enden miteinander verriegelt, so dass sich aus den drei armartigen Abschnitten ein dreieckförmiges Trägerelement mit gleich langen Seiten ergibt. Jeder armartige Abschnitt dieses Trägerelementes trägt auswärtsgerichtete Greifelementträger mit einem in etwa dreieckförmigen Profil, das mit seiner Basis der Reifenlauffläche des Rades zugekehrt ist und ein die Reifenlauffläche übergreifendes Greifelement trägt, das aus einem rechteckförmigen Rahmen besteht, dessen Seiten stegartige Profile trägt, die aus der Reifenlauffläche herausstehen.

Die Greifelementträger dieser Gleitschutzvorrichtung sind an den armartigen Abschnitten des Trägerelementes um parallel zur Radachse liegende Schwenkachsen und um quer zur Radachse verlaufende Schwenkachsen verschwenkbar. Eine derart ausgebildete Gleitschutzvorrichtung ist aufgrund ihrer konstruktiven Ausgestaltung ausschließlich für drei Greifelementträger vorgesehen. Eine Anpassung der Vorrichtung an unterschiedliche Reifengrößen ist nicht möglich, da die Lagerpunkte für die Gleitmittelträger festgelegt und in ihren Abständen von der Reifenlauffläche nicht veränderbar sind.

Durch die EP-A-0 745 494 (& CA 2 177 091 A1) ist eine Gleitschutz-Vorrichtung bekannt geworden, welche eine ring- oder scheibenförmige Stützvorrichtung aufweist, die in regelmäßigen Abständen über den Reifen greifende Bügel aufweist. Die Stützvorrichtung wird nur von den am Fahrzeugreifen angreifenden Bügeln gehalten. Um je nach Reifendurchmesser die Bügel in unterschiedlichen radialen Abständen an der stützvorrichtung zu befestigen, weist diese Befestigungsbereiche mit Öffnungen auf, die in unterschiedlichen radialen Abständen zur Scheibenmitte angeordnet sind, und in die hakenförmige Enden der Bügelt eingreifen können.
Aus der CA 2 190 218 A1 ist eine Gteitschutzvorrichtung mit einem dreiecksförmigen Grundkörper bekannt, von dem aus sich in gleichmäßigen Umfangsabständen armartige Greifelementträger zum Außenumfang des Fahrzeugrades erstrecken, wo um eine tangential ausgerichtete Drehachse an den Fahrzeugreifen schwenkbare Greifelementträger angelenkt sind. Die armartigen Greifelementträger sind radial innen mit einem Mutter-Spindel-Mechanismus verbunden, wobei alle drei vorgesehenen Mutter-Spindet-Mechanismen zentral durch winkelförmig zueinander angeordnete Zahnräder derart in Drehung versetzbar sind, dass die Greifelementträger radial ein- und ausfahrbar sind, um eine Anpassung an Fahrzeugreifen mit unterschiedlichen Größen zu ermöglichen.

Der Erfindung liegt die Aufgabe zugrunde, eine Gleitschutzvorrichtung der eingangs genannten Art zu schaffen, die sowohl vom Händler als auch vom Fahrzeugbesitzer mühelos an Fahrzeugreifen mit unterschiedlichen Größen montierbar ist, wobei die Größenverstellung der Gleitschutzvorrichtung in Anpassung an die jeweiligen Reifengrößen ohne großen technischen Aufwand und ohne eine Verwendung von armartigen Greifelementträgern mit unterschiedlichen Längen sondern lediglich durch die Veränderung des Abstandes des Befestigungspunktes des Greifelementträgers von der Reifenlauffläche durchführbar ist. Des weiteren soll die Gleitschutzvorrichtung flach zusammenlegbar sein; für eine leichte Montage der Gleitschutzvorrichtung an einem Fahrzeugrad sollen die armartigen Greifelementträger in einem gewissen Bereich pendelartig verschwenkbar sein.

Diese Aufgabe wird durch die im Anspruch 1 gekennzeichneten Merkmale gelöst.

Hiernach besteht die Erfindung darin, daß zur Anpassung der Gleitschutzvorrichtung an unterschiedliche Reifengrößen der Abstand des Befestigungspunktes eines jeden Greifelementträgers mit seinem Greifelement an dem Drehlager zur Reifenlauffläche veränderbar ist, wobei der Befestigungspunkt für jeden Greifelementträger nach erfolgter Einstellung auf die Reifengröße feststellbar ist, wobei jedes Greifelement außenseitig Spikes oder je zwei Greifelementträger miteinander verbindende Kettenabschnitte oder in Reifenumfangsrichtung auf der Reifenlauffläche anliegende Kettenstränge von Kettennetzen aufweisen.

Jedes außerhalb des Mittelpunktes des Trägerelementes liegende Drehlager bildet mit dem diesem zugeordneten Greifelementträger eine Baueinheit und ist einstückig ausgebildet. Drehlager und Greifelementträger bilden somit eine Einheit. Es besteht jedoch auch die Möglichkeit, jedes Drehlager mit dem diesem zugeordneten Greifelementträger lösbar zu verbinden, so daß bei Verschleiß ein Auswechseln sowohl des Drehlagers als auch des entsprechenden Greifelementträgers jederzeit möglich ist.

Jedes Drehlager weist mindestens eine zentrische Aufnahme zur Halterung des Greifelementträgers auf. Zur Durchmesserveränderung der Gleitschutzvorrichtung weist jedes Drehlager mindestens eine exzentrische Aufnahme zur Halterung des Greifelementträgers auf. Nach einer weiteren Ausführungsform weist jedes Drehlager je mindestens eine zentrische Aufnahme und zur Durchmesserveränderung der Gleitschutzvorrichtung mindestens eine exzentrische Aufnahme zur Halterung des Greifelementträgers auf. Jedes Drehlager kann ferner mehrere Aufnahmen für einen Greifelementträger aufweisen. Auch ist eine Ausgestaltung möglich, bei der das Drehlager mit einer zentrischen Aufnahme und mit mehreren exzentrischen Aufnahmen für den Greifelementträger versehen ist.

Der Dreh- bzw. Verschwenkbereich eines jeden Drehlagers ist seitlich begrenzt.
das Drehlager ist vorzugsweise als Haltescheibe ausgebildet.

Bei einer weiteren Ausführungsform der Erfindung ist jeder Greifelementträger der Gleitschutzvorrichtung lösbar mit dem Trägerelement verbunden, wobei jeder Greifelementträger in seinem Befestigungsbereich vermittels einer Steckverbindung an der an oder in der Ringfläche des Trägerelementes angeordneten, um eine horizontale Achse bei an dem Rad oder Radfelge befestigter Gleitschutzvorrichtung verdrehbaren Haltescheibe befestigt ist, die außermittig mindestens eine erste schlitzförmige Durchbrechnung und mittig eine parallel zu der außermittig angeordneten Durchbrechung eine zweite schitzförmige Durchbrechung zum Einführen des Greifelementträgers mit seinem der Reifenlauffläche abgekehrten Ende aufweist, so daß der Befestigungsbereich eines jeden Greifelementträgers in der ersten schlitzförmigen Durchbrechung der verdrehbaren Haltescheibe in radialer Richtung zur Reifenlauffläche zur Anpassung der Gleitschutzvorrichtung an verschiedene Reifengrößen durch Verdrehen einer jeden Haltescheibe in dem Trägerelement die erste schlitzförmige Durchbrechung lageveränderbar ausgebildet ist und eine reifenlaufflächennahe oder eine reifenlaufflächenferne Position einnimmt.

An dem Trägerelement sind also Drehlager angeordnet, welche zum Eingriff jeweiliger erster Enden der Greifelementträger derart ausgebildet sind, daß der jeweilige Greifelementträger in einer Ebene parallel zum Trägerelement um das Lager herum drehbar oder um das Lager um einen vorbestimmten Winkel verschwenkbar ist.

Eine derart erfindungsgemäß ausgebildete Gleitschutzvorrichtung erbringt folgende Vorteile:
- Anstelle der bekannten Schraubverbindungen zur Befestigung der Greifelementträger an einem Trägerelement z.B. in Form eines Ringkörpers von Gleitschutzvorrichtungen sind bei der erfindungsgemäßen Gleitschutzvorrichtung die Greifelementträger mittels einer Steck- und/oder Schwenkverbindung an dem Trägerelement gehalten, wobei die Greifelementträger für den Gebrauch aus einer an das Trägerelement herangeklappten Position in die Gebrauchsstellung herausgeklappt und bei Nichtgebrauch an das Trägerelement heranklappbar und darüber hinaus im Gebrauchszustand pendelartig um ihren Befestigungspunkt an dem Trägerelement verschwenkbar sind.
- Durch Veränderung der Abstandposition mindestens einer schlitzförmigen Durchbrechung von der Reifenlauffläche durch Verdrehen der die Steckverbindung für die Arme, d.h. die schlitzförmigen Durchbrechungen, aufweisenden verdrehbaren Haltescheibe, ist bei gleichbleibender Länge der Greifelementträger eine Anpassung an verschiedene Reifengrößen möglich.
- Durch die zum Mittelpunkt des Trägerelementes außermittige, exzentrische Anordnung mindestens eines Drehlagers und/oder einer schlitzförmigen Durchbrechung in der verdrehbaren Haltescheibe in dem Trägerelement für jeden Greifelementträger der Gleitschutzvorrichtung ist es durch Verdrehen der Haltescheibe möglich, den Befestigungspunkt für den Greifelementträger in seiner Lage derart zu verändern, daß der Befestigungspunkt einmal einer reifenlaufflächennahe oder einer reifenlaufflächenferne Position einnimmt, so daß beispielsweise zwei verschiedene Reifengrößen bedient werden können.
- Die Größenverstellung der Gleitschutzvorrichtung zur Anpassung an unterschiedliche Reifengrößen ist mühelos sowohl vom Händler und vom Monteur als auch vom Käufer durchführbar.
- Die Teile der Gleitschutzvorrichtung, wie Trägerelement und Greifelementträger, können einzeln vom Kunden erworben und baukastenartig selbst mühelos zusammengesteckt werden, wobei der Kunde gleichzeitig eine Größenanpassung an die vorhandenen Reifen vornehmen kann.
- Dadurch, daß jeder Greifelementträger der Gleitschutzvorrichtung vermittels einer Steckverbindung in der verdrehbaren Haltescheibe gehalten ist, ist eine mühelose Montage der Greifelementträger an dem Trägerelement und auch ein müheloses Abnehmen der Greifelementträger von dem Trägerelement möglich, wenn im letzeren Fall beschädigte Greifelementträger ausgetauscht werden müssen.
- Dadurch, daß jeder Greifelementträger der Gleitschutzvorrichtung in seiner Steckverbindung um eine quer zur Längsachse eines jeden Greifelementträgers verlaufende Schwenkachse verschwenkbar ist, sind im Nichtbetriebszustand der Gleitschutzvorrichtung alle Greifelementträger in Richtung zu dem Trägerelement auf dieses klappbar, so daß für das Mitführen der Gleitschutzvorrichtung in einem Fahrzeug, für die Aufbewahrung der Gleitschutzvorrichtung und für die Vorratshaltung der Gleitschutzvorrichtung wenig Raum erforderlich ist.
- Durch die Verdrehbarkeit der Haltescheiben für die Befestigung der Greifelementträger sind diese pendelartig seitlich verschwenkbar, was die Montage der Gleitschutzvorrichtung wesentlich erleichtert.

Vorteilhafte Ausgestaltungen der Erfindung sind in den Unteransprüchen gekennzeichnet.

Ausführungsbeispiele der Erfindung werden nachstehend anhand der Zeichnungen näher erläutert. Es zeigen:
- Fig. 1: in einer Ansicht von oben einen Abschnitt der Gleitvorrichtung mit an ihrem als Ringkörper ausgebildeten Trägerelement angeordneten, um senkrechte Achsen zum Trägerelement verschwenkbaren Greifelementträgern mit an ihren Enden tragenden Greifelementen,
- Fig. 2: einen senkrechten Schnitt durch eine an einer Radfelge befestigte Gleitschutzvorrichtung mit einem an ihrem Trägerelement angeordneten, Greifelementträger mit einem auf der Reifenlauffläche anliegenden Spikes tragenden Greifelement,
- Fig. 3: einen senkrechten Schnitt durch das Trägerelement mit eingeklapptem Greifelementträger,
- Fig. 3A und 3B: vergrößerte schaubildliche Ansichten eines bajonettartig ausgebildeten Drehlagers,
- Fig. 4: in einer Ansicht von oben das dem Spikes tragenden Greifelement abgekehrte Befestigungsende des Greifelementträgers mit beidseitig auskragenden Rastnocken,
- Fig. 5: in einer Ansicht von oben einen Abschnitt des Trägerelementes mit einem an einer verdrehbaren, in dem Trägerelement gehaltenen Haltescheibe mit einer außermittig zu der Haltescheibe in dieser ausgebildeten schlitzförmigen Durchbrechung mit in diese eingestecktem Greifelementträger in einer Position, in der der Befestigungsbereich des Greifelementträgers an der verdrehbaren Haltescheibe eine reifenlaufflächenferne Position einnimmt,
- Fig. 6: in einer Ansicht von oben einen Abschnitt des Trägerelementes mit einem an einer verdrehbaren, in dem Trägerelement gehaltenen Haltescheibe mit einer außermittig zu der Haltescheibe in dieser ausgebildeten schlitzförmigen Durchbrechung mit in diese eingestecktem Greifelementträger in einer Position, in der der Befestigungsbereich des Greifelementträgers an der verdrehbaren Haltescheibe eine reifenlaufflächennahe Position einnimmt,
- Fig. 7: in einer schematischen Ansicht eine in dem Trägerelement verdrehbar gehaltene Haltescheibe mit einer außermittig in der Haltescheibe ausgebildeten schlitzförmigen Durchbrechung zur Befestigung des Greifelementträgers mit seinem der Haltescheibe zugekehrten Ende vermittels einer Steckverbindung, wobei die schlitzförmige Durchbrechung eine der Reifenlauffläche abgekehrte Position für kleine Reifengröße einnimmt,
- Fig. 8: in einer schematischen Ansicht eine in dem Trägerelement verdrehbar gehaltene Haltescheibe mit einer außermittig in der Haltescheibe ausgebildeten schlitzförmigen Durchbrechung zur Befestigung des Greifelementträgers mit seinem der Haltescheibe zugekehrten Ende vermittels einer Steckverbindung, wobei die die schlitzförmige Durchbrechung eine der Reifenlauffläche zugekehrte Position für große Reifengrößen einnimmt,
- Fig.9, 9A und 9B: in schematischen Ansichten eine in dem Trägerelement verdrehbar gehaltene Haltescheibe mit einer mittig und mit einer außermittig in der Haltescheibe ausgebildeten schlitzförmigen Durchbrechung zur Befestigung des Greifelementträgers mit seinem der Haltescheibe zugekehrten Ende vermittels einer Steckverbindung in drei verschiedenen Befestigungspositionen für den Greifelementträger für drei verschiedene Reifengrößen,
- Fig. 10: eine Ansicht von oben auf einen Abschnitt der Reifenlauffläche mit einem auf dieser anliegenden, gabelartig ausgebildeten Greifelement mit schräg zur Radachse verlaufenden Längsseitenkanten und mit auf der Oberfläche des Greifelementes konturerhaben ausgebildeten Profilen und
- Fig. 11: eine Ansicht von oben auf einen Abschnitt der Reifenlauffläche mit einem auf dieser anliegenden Greifelement in einer weiteren Ausführungsform,

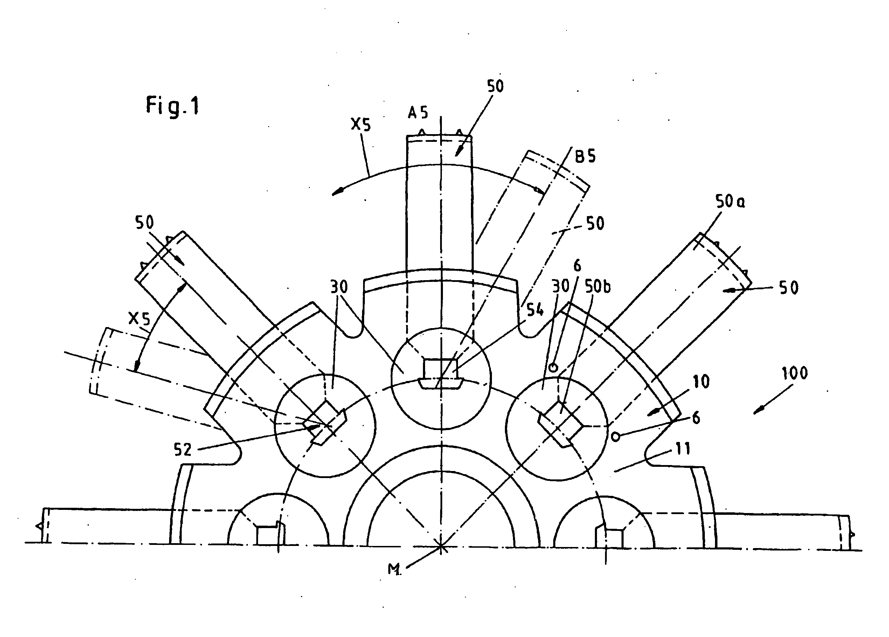

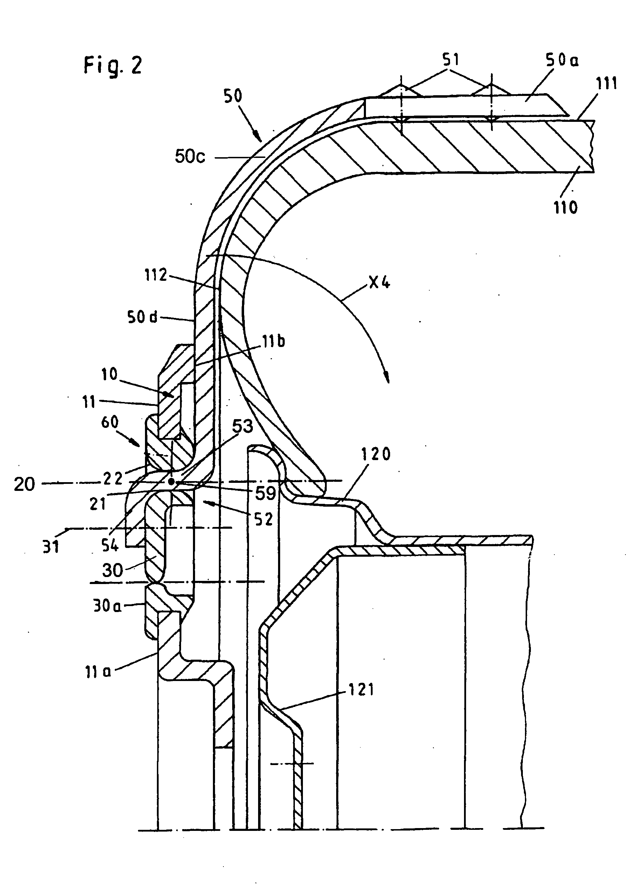

Die in Fig. 1, 2 und 3 dargestellte Gleitschutzvorrichtung 100, insbesondere für luftbereifte Fahrzeugräder auf Eis- und Schneeflächen besteht aus einem Trägerelement 10 als Traghalterung für mindestens einen armartigen Greifelementträger 50 bzw. für eine Anzahl von radial angeordneten Greifelementträgern 50, die an ihren beiden Enden Greifelemente 50a tragen, die fest, lösbar oder scharnierartig an den Greifelementträgern 50 befestigt sein können. Die Befestigung des Trägerelementes 10 erfolgt z.B. mittels Felgenschrauben oder anderen geeigneten Mitteln, z.B. elastischer Elemente od. dgl. an der Felge 120 eines Rades für ein Kraftfahrzeug, dessen Felgenschüssel mit 121 und dessen Reifen mit 110 bezeichnet ist. Die Reifenlauffläche ist bei 111 und die Reifenseitenwandfläche bei 112 in Fig. 2 dargestellt. Das Trägerelement 10 ist bevorzugterweise ringförmig ausgebildet; es kann jedoch auch platten- oder kreisscheibenförmig ausgebildet sein und jede beliebige geometrische Form aufweisen.

Die an dem z.B. als Ringkörper ausgebildeten Trägerelement 10 angeordneten Greifelementträger 50 verlaufen radial und liegen mit einem Abschnitt 50c an der Flanke des Reifens 110 an. Die freien Enden 50a der Greifelementträger 50 sind abgebogen und übergreifen ganz oder teilweise die Reifenlauffläche 111 bzw. liegen auf dieser auf. Die freien Enden der Greifelementträger 50 tragen die Greifelemente 50a mit außenseitig im Bereich der Reifenlauffläche 111 angeordneten Spikes 51 oder in der Zeichnung nicht dargestellte Kettenabschnitte oder in Reifenumfangrichtung auf der Reifenlauffläche 111 verlaufende, durchgehende Kettenstränge von Kettennetzen. Jede Art von Schneeketten kann hier zur Anwendung gelangen und an den Greifelementträgern bzw. zwischen deren Greifelemente angeordnet sein.

Jeder Greifelementträger 50 ist an dem Trägerelement 10 bzw. an dessen Ringkörper außerhalb des Mittelpunktes des Trägerelementes an diesem angeordnet. Das den jeweiligen Greifelementträger 50 aufnehmende Drehlager 30 ist ebenfalls außermittig, d.h. exzentrisch zum Mittelpunkt M des Trägerelementes 10 an diesem bzw. an dem Ringkörper angeordnet. Des weiteren ist jeder Greifelementträger 50 u. a. auch vermittels des Drehlagers 30 um eine parallel zur Mittelachse des Trägerelementes 10 und/oder um eine quer zur Mittelachse des Trägerelementes 10 verlaufende Schwenkachse verschwenkbar, so daß im ersten Fall jeder Greifelementträger 50 wechselseitig in Umlaufrichtung der Lauffläche des Reifens verschwenkbar ist und im zweiten Fall jeder Greifelementträger 50 aus der Betriebsstellung an die Innenseite des Trägerelementes 50 klappbar ist, so daß die Gleitschutzvorrichtung auf kleinsten Raum zusammenlegbar ist.

Für eine wechselseitige Schwenkbewegung der Greifelementträger 50 um den Mittelpunkt des Trägerelementes 10 ist an diesem eine der Anzahl der Greifelementträger 50 entsprechende Anzahl von Drehlagern 30 an dem Trägerelement angeordnet bzw. vorgesehen, wobei an jedem Drehlager 30 mindestens ein Greifelementträger 50 mit seinem dem Trägerelement zugekehrten Ende gehalten ist. Die Greifelementträger 50 verschwenken zusammen mit den ihnen zugeordneten Drehlagern in Pfeilrichtung X5 (Fig. 1). Ist das Trägerelement 10 ringförmig ausgebildet, sind die Greifelementträger 50 an der Ringfläche schwenkbar gehalten, wobei dann die Drehlager auch in der Ringfläche angeordnet sind.

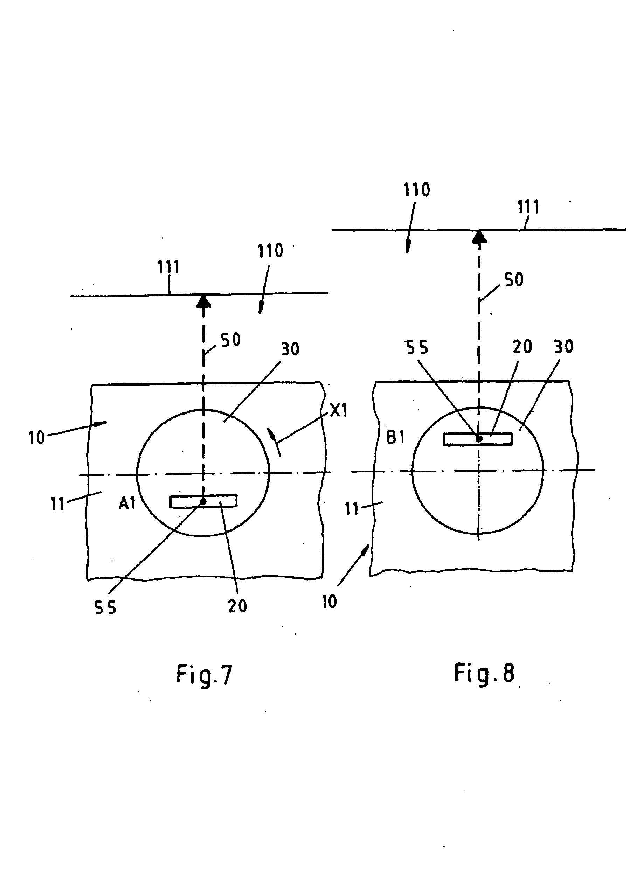

Zur Anpassung der Gleitschutzvorrichtung 100 an unterschiedliche Reifengrößen ist der Abstand der Befestigungspunkte 55 (Fig. 7 bis 9) eines jeden Greifelementträgers 50 an der Ringfläche 11 des Ringkörpers des ringförmig ausgebildeten Trägerelements 10 veränderbar ausgebildet, wobei der Befestigungspunkt 55 für einen jeden Greifelementträger 50 nach erfolgter Einstellung auf die Reifengröße feststellbar ist.

Jedes Drehlager 30 kann mit dem dem Drehlager zugeordneten Greifelementträger 50 eine Baueinheit bilden, so daß das Drehlager 30 und der Greifelementträger einstückig ausgebildet ist. Es besteht jedoch auch die Möglichkeit, jedes Drehlager mit dem diesem zugeordneten Greifelementträger 50 lösbar zu verbinden.

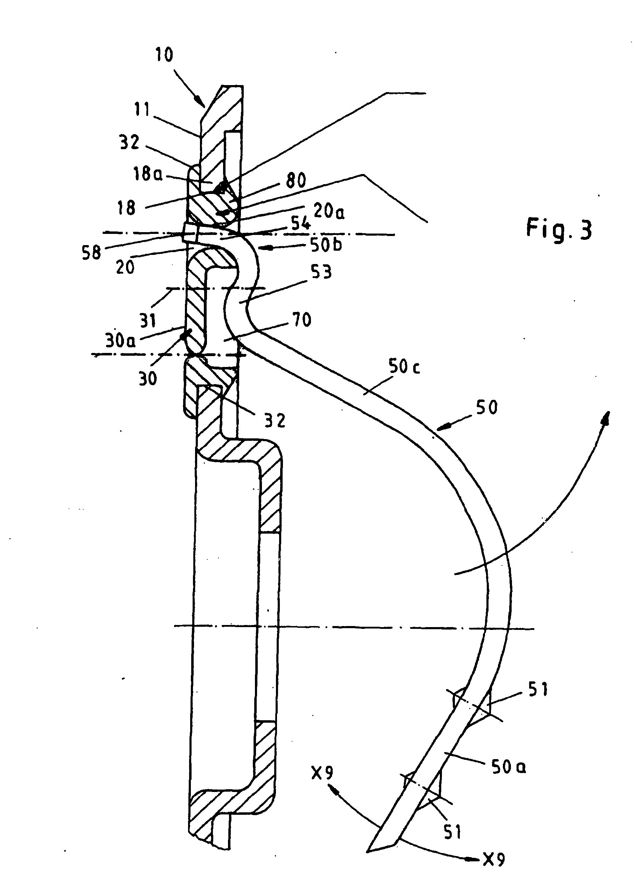

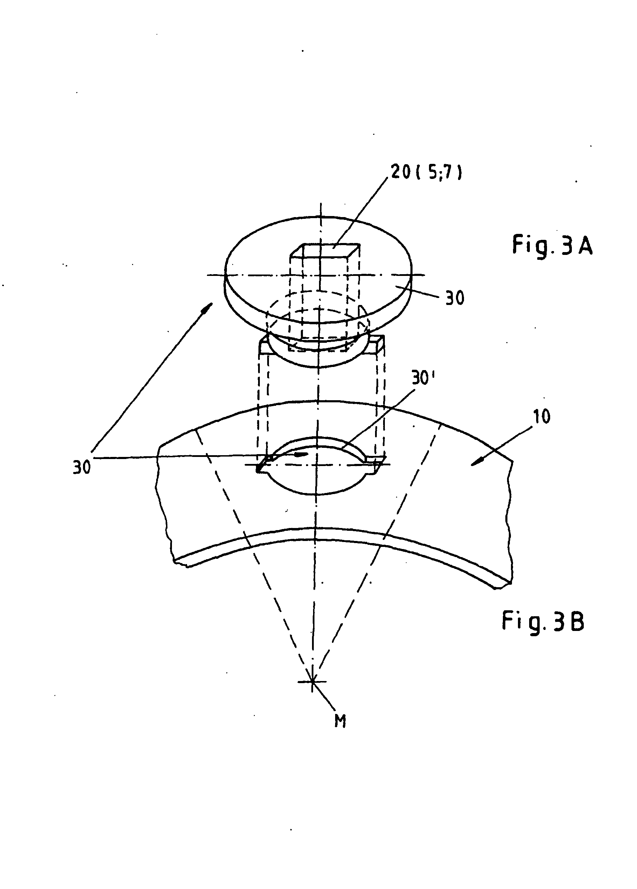

Nach den Fig. 3, 7 und 8 ist zur Durchmesserveränderung der Gleitschutzvorrichtung ist jedes Drehlager 30 mit mindestens einer exzentrischen Aufnahme 20 zur Halterung des Greifelementträgers 50 versehen.

Für jeden Greifelementträger kann jedes Drehlager 30 mehrere Aufnahmen 20 aufweisen. Auch besteht die Möglichkeit, jedes Drehlager 30 mit einer exzentrischen Aufnahme 20 und mehreren weiteren exzentrischen Aufnahmen 20 zu versehen. Die Anordnung der exzentrischen Aufnahmen kann dabei auch derart sein, daß jedes Drehlager 30 eine exzentrische Aufnahme 20 und je eine oberhalb und unterhalb dieser exzentrischen Aufnahme liegende weitere exzentrische Aufnahme 20 für den Greifelementträger 50 aufweist.

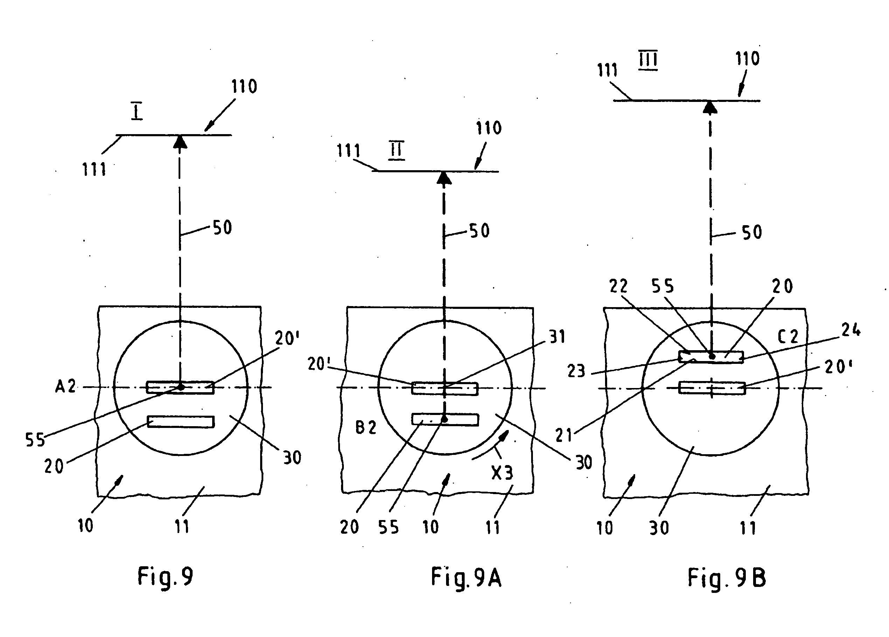

Nach den Fig. 9, 9A und 9B ist das Drehlager 30 mit einer zentrischen Aufnahme 20' und mindestens einer weiteren exzentrischen Aufnahme 20 versehen, wobei die exzentrische Aufnahme ober- oder unterhalb der zentrischen Aufnahme liegen kann.

Der Dreh- bzw. Verschwenkbereich eines jeden Drehlagers 30 ist seitlich durch an dem Trägerelement 10 befestigten Nocken 6 oder andere mechanische Einrichtungen begrenzt.

Jedes Drehlager 30 ist bevorzugterweise als Haltescheibe für den Greifelementträger 50 in einer Ausnehmung in dem Trägerelement 10 drehbar gehalten.

Das Drehlager 30 ist in die dem Drehlager zugeordnete Ausnehmung oder Durchbrechung in dem Trägerelement 10 beispielsweise bajonettartig eingesetzt (Fig. 3A und 3B).

Das Drehlager 30 selbst besteht aus einem Kunststoff oder einem anderem geeignetem Material, wobei auch metallische Werkstoffe zur Herstellung des Drehlagers herangezogen werden können. Auch das Trägerelement 10 kann aus Kunststoff oder einem anderen geeigneten Werkstoff, insbesondere metallischen Werkstoff bestehen.

Die Greifelementträger 50 sind in die Aufnahmen 20, 20' der Drehlager 30 einsteckbar. Die Lagerung der Greifelementträger 50 an den Drehlagern bzw. an dem Trägerelement ist derart, daß die Greifelementträger 50 in die in Fig. 2 dargestellte Stellung herausklappbar und bei Nichtgebrauch in die in Fig. 3 gezeigte Stellung einklappbar sind, so daß im Nichtgebrauchszustand die Gleitschutzvorrichtung kleinste Abmessungen aufweist und raumsparend untergebracht werden kann. Darüber hinaus ist jeder Greifelementträger 50 vermittels des Drehlagers in Pfeilrichtung X5 (Fig. 1) verschwenkbar bzw. verdrehbar.

Jeder Greifelementträger 50 der Gleitschutzvorrichtung 100 ist über eine nachstehend näher beschriebene Steckverbindung 60 mit dem Trägerelement 10 lösbar verbunden.

Bei der in Fig. 1, 2 und 3 gezeigten Ausführungsform einer Gleitschutzvorrichtung 100 ist ebenfalls jeder Greifelementträger 50 der Gleitschutzvorrichtung 100 mit dem Trägerelement 10 lösbar verbunden. Jeder Greifelementträger 50 ist dabei in seinem Befestigungsbereich 55 vermittels einer Steckverbindung 60 an einer an oder in der Ringfläche 11 des Ringkörpers des Trägerelementes 10 angeordneten, um eine senkrecht zu der Ringfläche 11 des Ringkörpers stehende Achse 31 bei an dem Rad oder der Radfelge 120 befestigter Gleitschutzvorrichtung 100 verdrehbaren das Drehlager bildenden Haltescheibe 30 befestigt. Für die Aufnahme und Halterung der Haltescheibe 30 ist in der Ringfläche 11 des Ringkörpers für jeden Greifelementträger 50 eine Durchbrechung 18 (Fig. 3) ausgebildet, in der die Haltescheibe 30 gehalten, geführt und gelagert ist. Diese Haltescheibe 30 weist außermittig mindestens eine schlitzförmige Durchbrechung 20 zum Einführen und Befestigen des Greifelementträgers 50 mit seinem der Reifenlauffläche 111 abgekehrten Ende 50b mittels der Steckverbindung 60 auf, so daß der Befestigungsbereich 55 bzw. die schlitzförmige Durchbrechung 20 eines jeden Greifelementträgers 50 an der verdrehbaren Haltescheibe 30 in radialer Richtung zu der Reifenlauffläche 111 zur Anpassung der Gleitschutzvorrichtung 100 an verschiedene Reifengrößen durch Verdrehen der Haltescheibe 30 lageveränderbar ist und somit eine reifenlaufflächennahe oder eine reifenlaufflächenferne Position einnimmt. Die Anzahl der Haltescheiben 30 in der Ringfläche 11 des Stützringes entspricht der Anzahl der Greifelementträger 50, die die Gleitschutzvorrichtzung 100 aufweist. Bevorzugterweise weist jede verdrehbare Haltescheibe 30 eine in dieser außermittig angeordnete schlitzförmige Durchbrechung 20 auf.

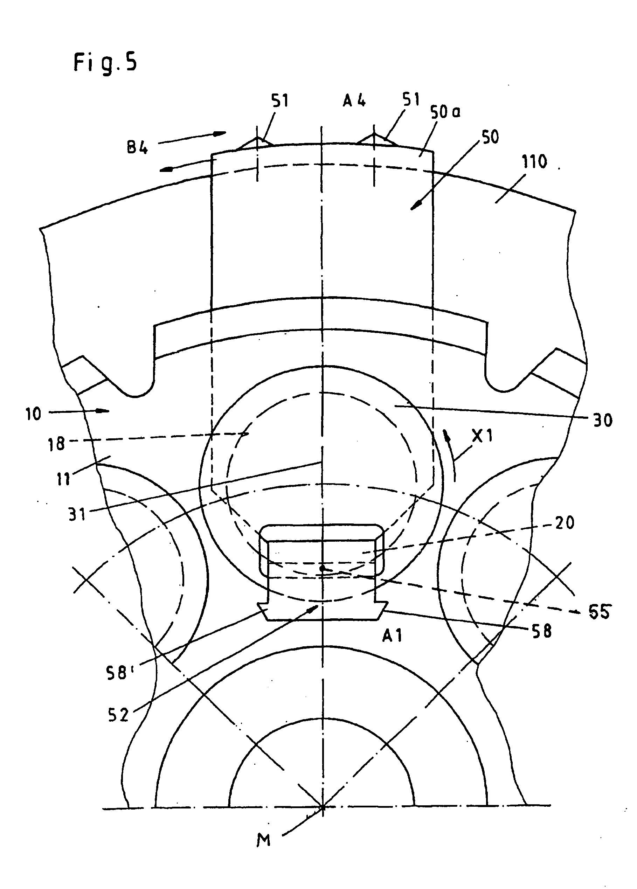

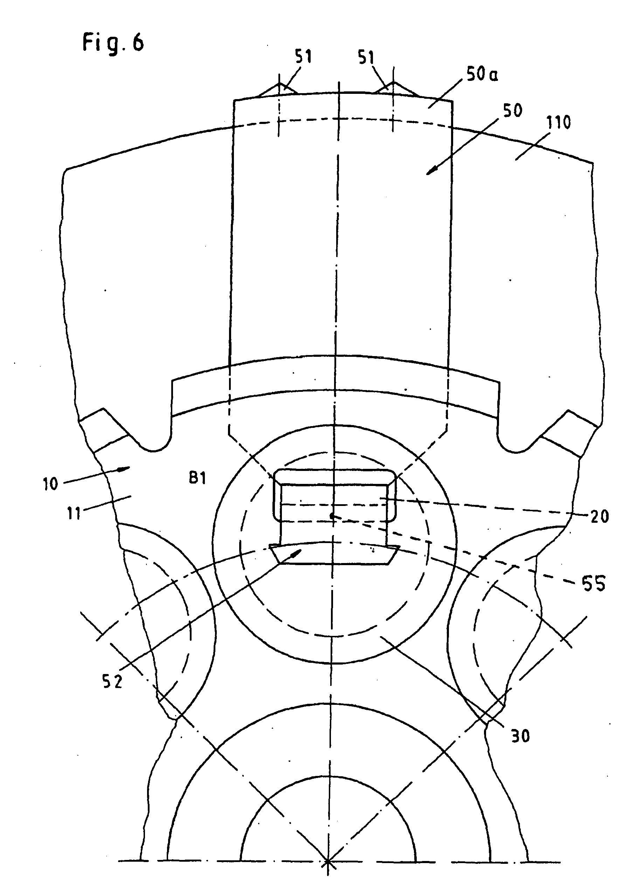

Fig. 5 zeigt eine Stellung der schlitzförmigen Durchbrechung 20 in der Haltescheibe 30 auf, in der die schlitzförmige Durchbrechung eine reifenlaufflächenferne Position einnimmt, d. h. die schlitzförmige Durchbrechung 20 und somit der Befestigungsbereich 55 für den Greifelementträger 50 befindet sich in einer zur Reifenlauffläche 111 abgekehrten Position. In dieser Stellung der Haltescheibe 30 mit seiner schlitzförmigen Durchbrechung 20 ist die Gleitschutzvorrichtung für kleine Reifengrößen verwendbar, wohingegen bei der Position der schlitzförmigen Durchbrechung 20 in der Haltescheibe 30 gemäß Fig. 6 der Befestigungsbereich 55 für den Greifelementträger 50 eine reifenlaufflächennahe Position einnimmt, nachdem die Haltescheibe 30 in Pfeilrichtung X1 von der Position A1 (Fig. 5) in die Position B1 (Fig. 6) überführt worden, ist. In der in Fig. 6 gezeigten Stellung der schlitzförmigen Durchbrechung 20 in der Haltescheibe 30 nimmt der Greifelementträger 50 eine Position ein, aufgrund der die Gleitschutzvorrichtung 100 für eine größere Reifengröße einsetzbar ist. Die Anpassung der Gleitschutzvorrichtung an verschiedene Reifengrößen wird hiernach mit der gleichen Länge der Greifelementträger 50 erreicht.

Die Fig. 7 und 8 zeigen schematisch die Stellungen der verdrehbaren Haltescheibe 30 gemäß der Fig. 5 und 6, wobei nach Fig. 7 der Befestigungspunkt 55 des Greifelementträgers 50 in der schlitzförmigen Durchbrechung 20 eine reifenlaufflächenferne Position einnimmt, so daß in dieser Stellung A1 der Greifelementträger 50 die Gleitschutzvorrichtung für kleine Reifengrößen einsetzbar ist. Soll die Gleitschutzvorrichtung 100 bei größeren Reifengrößen eingesetzt werden, dann ist die Haltescheibe 30 in Pfeilrichtung X1 soweit zu verdrehen, bis die schlitzförmige Durchbrechung 20 die in Fig. 8 gezeigte Stellung B1 einnimmt. Mit gleicher Länge der Greifelementträger 50 wird somit die Möglichkeit geschaffen, die Gleitschutzvorrichtung 100 auch für größere Reifengrößen zu verwenden, ohne daß Greifelementträger 50 mit unterschiedlichen Längen eingesetzt werden müssen.

Die verdrehbaren Haltescheiben 30 mit ihren schlitzförmigen Durchbrechungen 20 für die Anordnung der Greifelementträger 50 mittels Steckverbindungen 60 können nach einer weiteren Ausführungsform gemäß Fig. 9, 9A, 9B außermittig eine erste schlitzförmige Durchbrechung 20 und mittig eine parallel zu der außermittig angeordneten Durchbrechung 20 verlaufende zweite schlitzförmige Durchbrechung 20' zum Einführen des Greifelementträgers 50 mit seinem der Reifenlauffläche 111 abgekehrten Ende 50b versehen sein. Dadurch, daß bei dieser Ausführungsform die verdrehbare Haltescheibe 30 für jeden Greifelementträger 50 mit zwei unterschiedlich positionierten schlitzförmigen Durchbrechung 20, 20' versehen ist, ist die Möglichkeit gegeben, mit einer derartig ausgebildeten Gleitschutzvorrichtung drei verschiedene Reifengrößen zu bedienen. Bei einer Befestigung des Greifelementträgers 50 in der schlitzförmigen Durchbrechung 20' der Haltescheibe 30 nimmt der Befestigungspunkt 55 des Greifelementträgers 50 die in Fig. 9 gezeigte Position A2 ein. Wird der Greifelementträger 50 umgesteckt und in der schlitzförmigen Durchbrechung 20 befestigt, dann nimmt der Befestigungspunkt 55 des Greifelementträgers 50 die in Fig. 9A gezeigte Stellung B2 ein. In dieser Stellung der Haltescheibe 30 nimmt die schlitzförmige Durchbrechung 20 eine reifenlaufflächenferne Position ein. Wird die Haltescheibe 30 in Pfeilrichtung X3 um ihren Mittelpunkt 31 derart verschwenkt, daß ihre schlitzförmige Durchbrechung 20 eine reifenlaufflächennahe Position einnimmt, wie in Fig. 9B gezeigt, dann nimmt der Befestigungspunkt 55 des Greifelementträgers in der schlitzförmigen Durchbrechung 20 die Position C2 ein. Auf diese Weise ist die Möglichkeit gegeben drei verschiedene Reifengrößen I, II, III zu bedienen.

Das freie in der schlitzförmigen Durchbrechung 20, 20' in dem Schlitten 15 oder in der Ringfläche 11 des Trägerelementes 10 oder in der verdrehbaren Haltescheibe 30 gehaltene Ende 50b eines jeden Greifelementträgers 50 der Gleitschutzvorrichtung weist eine Z-förmige Profilausgestaltung 52 (Fig. 2) auf, die in Verbindung mit der schlitzförmigen Durchbrechung 20, 20', die Steckverbindung 60 zum Befestigen eines jeden Greifelementträgers 50 an dem Trägerelement 10 bildet. Diese Z-förmige Profilausgestaltung 52 des Endes 50b eines jeden Greifelementträgers 50 besteht aus einem in einem rechten Winkel zu dem geradlinig verlaufenden Abschnitt 50c des Greifelementträgers 50 abgebogenen ersten Endabschnitt 53 und aus einem in einem rechten Winkel zu dem ersten Endabschnitt 53 abgebogenen und parallel zu dem geradlinig verlaufenden Abschnitt 50c des Greifelementträgers 50 verlaufenden zweiten Endabschnitt 54 (Fig. 2). Die Befestigung eines jeden Greifelementträgers 50 erfolgt in der Weise, daß durch die schlitzförmige Durchbrechung 20, 20' der Greifelementträger 50 mit seinem freien Ende 50b eingesteckt wird, so daß der abgewinkelte Endabschnitt 54 der Z-förmigen Profilausgestaltung 52 des Endes 50b des Greifelementträgers auf der Außenwandfläche 11 a der Ringfläche 11 des Ringkörpers des Trägerelementes 10 oder auf der Außenwandfläche 30a der verdrehbaren Haltescheibe 30 abstützt, wobei sich der Greifelementträger 50 im Übergangsbereich seines geradlinig verlaufenden Abschnittes 50c des Greifelementträgers mit dem abgewinkelten Endabschnitt 53 der Z-förmigen Profilausgestaltung 52 des Endes 50b des Greifelementträgers 50 an der dem Rad zugekehrten Wandfläche 11b des Trägerelementes 10 bevorzugter Weise vermittels einer wulstartigen Abstützfläche, die an der die schlitzförmige Durchbrechung 20 begrenzenden Wand 20a vorgesehen ist. Diese wulstartige Abstützfläche 80 bildet gleichzeitig die die schlitzförmige Durchbrechung 20, 20' begrenzende Längskante 22 (Fig. 2).

Durch die Verwendung der Steckverbindung 60 aus der Z-förmigen Profilausgestaltung 52 des Endes 50b eines jeden Greifelementträgers 50 und durch die schlitzförmige Durchbrechung 20, 20' ist jeder Greifelementträger 50 nicht nur lösbar mit dem Trägerelement 10 verbunden, sondern darüber hinaus auch noch in der schlitzförmigen Durchbrechung 20, 20' um eine Achse 59 verschwenkbar, die parallel zum Trägerelement 10 verlaufend ist (Fig. 2). Dadurch ist die Möglichkeit gegeben, jeden Greifelementträger 50 der Gleitschutzvorrichtung 100 bei Nichtgebrauch der Gleitschutzvorrichtung in Pfeilrichtung X4 zu verschwenken und an die Innenseite des Trägerelementes 10 einzuklappen (Fig. 3).

Jede schlitzförmige Durchbrechung 20, 20' ist begrenzt durch Längsseiten 21, 22 und Schmalseiten 23, 24 (Fig. 9B).

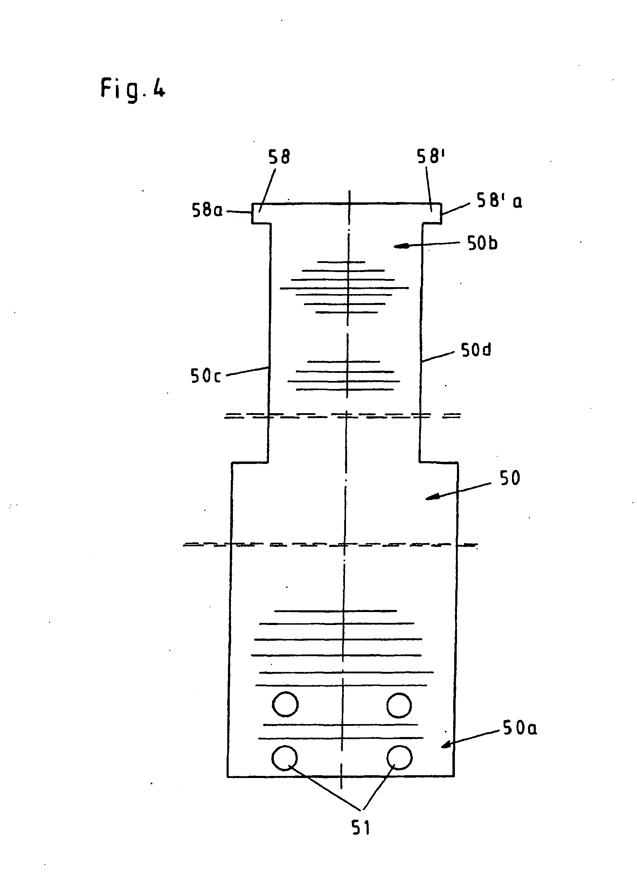

Um die Greifelementträger 50 der Gleitschutzvorrichtung 100 soweit wie möglich an den Trägerelement 10 heranklappen zu können, ohne daß dabei die Greifelementträger aus den schlitzförmigen Durchbrechungen 20, 20' herausgezogen werden, ist die Länge des Endabschnittes 53 der Z-förmigen Profilausgestaltung 52 an dem Ende 50b eines jeden Greifelementträgers derart lang bemessen, daß bei einem Einklappen des Greifelementträgers an die Innenseite des Trägerelement 10 das freie Ende 10b des Greifelementträgers 50 auf der Außenwandfläche 30a der Haltescheibe 30 soweit gleitet, bis das freie Ende 50b des Greifelementträgers 50 vermittels seitlicher am Ende des Greifelementträgers angeformter Rastnocken 58, 58' (Fig. 4) an den Schmalseiten 23, 24 der den Greifelementträger 50 aufnehmenden schlitzförmigen Durchbrechung 20, 20' zur Anlage gebracht ist.

In Betriebszustand der Gleitschutzvorrichtung 100 nimmt dann jeder Greifelementträger 50 die in Fig. 2 gezeigte Stellung ein. Das freie Ende 50b des Greifelementträgers mit seiner Z-förmigen Profilausgestaltung 52 ist dann durch die schlitzförmige Durchbrechung 20 so hindurchgesteckt, daß der freie Endabschnitt 54 des Greifelementträgers 50 auf der Außenwandfläche 30a der Haltescheibe zu liegen kommt und sich auf dieser abstützt und dabei mit seiner ganzen Abschnittslänge auf der Haltescheibe 30 aufliegt (Fig. 2). Beim Einklappen der Greifelementträger 50 wird das freie Ende 50b eines jeden Greifelementträgers 50 aus der schlitzförmigen Durchbrechung 20 soweit herausgeführt, bis die seitlichen Rastnocken 58, 58' (Fig. 4) an dem Ende 50b des Greifelementträgers 50 sich an den Seitenkanten 23, 24 der schlitzförmigen Durchbrechung 20 abstützen (Fig. 9B).

Zur Unterstützung des Verschwenkens eines jeden Greifelementträgers 50 in die eingeklappte Stellung (Fig. 3), weisen die eine jede schlitzförmige Durchbrechung 20, 20' in der Ringfläche 11 des Trägerelementes 10 oder in dem Schlitten 15 oder in verdrehbaren Haltescheibe für den Greifelementträger 50 begrenzenden Längsseitenkanten 21, 22 (Fig. 9B) eine bogenförmige Wandausgestaltung als Schwenkhilfe für das Heranklappen eines jeden Greifelementträgers 50 an den Stützring bzw. an das Trägerelement 10 um eine senkrecht zu der Mittelachse 31 der Haltescheibe 30 stehende Schwenkachse 59 auf.

Nach Fig. 4 erstrecken sich die an dem freien Ende 50b eines jeden Greifelementträgers 50 der Gleitschutzvorrichtung 100 angeordneten bzw. angeformten Rastnocken 58, 58' zu beiden Seiten der Längsseitenkanten 50d, 50e des Greifelementträgers 50, wobei die Länge von der äußeren Kante 58a des einen Rastnockens 58 zu der äußeren Kante 58'a des anderen Rastnokkens 58 etwas größer bemessen ist, als die Länge der schlitzförmigen Durchbrechung 20, 20' in der Haltescheibe 30, der Ringfläche 11 des Ringkörpers des Trägerelementes 10 oder der verdrehbaren Haltescheibe 30 (Fig. 4).

Die Haltescheibe 30 an der dem Rad oder der Felge zugekehrten Wandfläche ist mit einer Einziehung 70 (Fig. 3) zur Aufnahme der abgebogenen Endabschnitte 53, 54 des Endes 50b eines jeden Greifelementträgers 50 in eingeklappter Position der Greifelemente 50 der Gleitschutzvorrichtung versehen.

Jede verdrehbare Haltescheibe 30 mit der schlitzförmigen Durchbrechung 20 bzw. den schlitzförmigen Durchbrechungen 20, 20' zur Halterung und Aufnahme des Greifelementträgers 50 mit seinem Ende 50b ist kreisförmig ausgebildet und in einer in der Ringfläche 11 des Ringkörpers des Trägerelementes 10 ausgebildeten, ebenfalls kreisförmigen Durchbrechung 18 mittels Klemmsitz drehbar gehalten und lagegesichert (Fig. 5). Die umlaufende Wandfläche 32 (Fig. 3) einer jeden verdrehbaren Haltescheibe 30 für den Greifelementträger 50 ist als Ringnut 32 ausgebildet, in die die umlaufende Wand 18a der die Haltescheibe 30 aufnehmende kreisförmige Durchbrechung 18 eingreift.

Jede verdrehbare Haltescheibe 30 mit in deren schlitzförmigen Durchbrechung 20, 20' vermittels der Steckverbindung 60 gehaltenem Greifelementträgers 50 ist bei einem Verschwenken des Greifelementträgers 50 aus seiner radialen Reifenanlageposition A4 (Fig. 5) um die senkrecht zu der Haltescheibe 30 stehende Mittelachse 31 der Haltescheibe 30 in eine seitliche Position B4 und zurück in die Position A4 zurückschwenkbar, in der der Greifelementträger 50 seine radiale Anlageposition an dem Reifen einnimmt (Fig. 5). Alle Greifelementträger 50 der Gleitschutzvorrichtung 100 sind um ihre Befestigungspunkte 50b in den verdrehbaren Haltescheiben 30 in Pfeilrichtung X5 verschwenkbar (Fig. 1). Das Zurückverschwenken eines jeden Greifelementes 50 von der Position B5 in die Position A5 wird unterstützt beispielsweise mittels Federkräften, die auf die Haltescheibe 30 einwirken und die ein Zurückverdrehen der Haltescheibe 30 in ihre Ausgangsposition von einer verdrehten Position aus unterstützen.

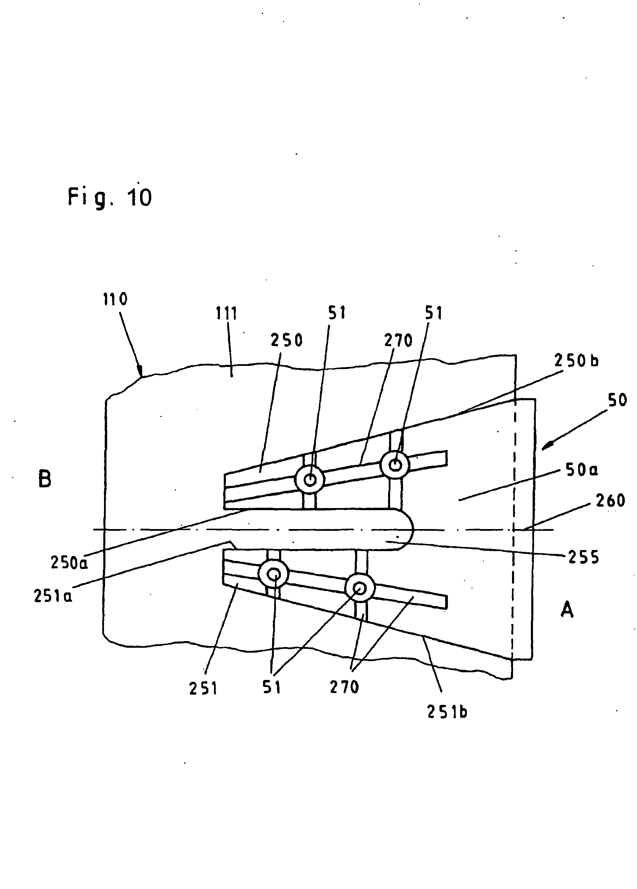

Nach Fig. 10 ist das Greifelement 50a am Ende des Greifelementträgers 50, das auf der Lauffläche 111 des Reifens 110 anliegt, gabelartig, d.h. V-förmig ausgebildet, und weist zwei Schenkel 250, 251 auf, deren einander zugekehrten Längskanten 250a, 251a, parallel unter Ausbildung eines etwa U-förmigen Zwischenraumes 255 zueinander verlaufen, während die äußeren Längsseitenkanten 250b, 251b schräg verlaufend zur Radachse 260 sind. Bei der Ausführungsform gemäß Fig. 10 verlaufen die äußeren Längsseitenkanten 250b, 251b in Richtung A nach außen hin sich erweiternd, wobei die Längsseitenkanten 250b, 251b auch in Richtung B nach innen sich erweiternd verlaufen können.

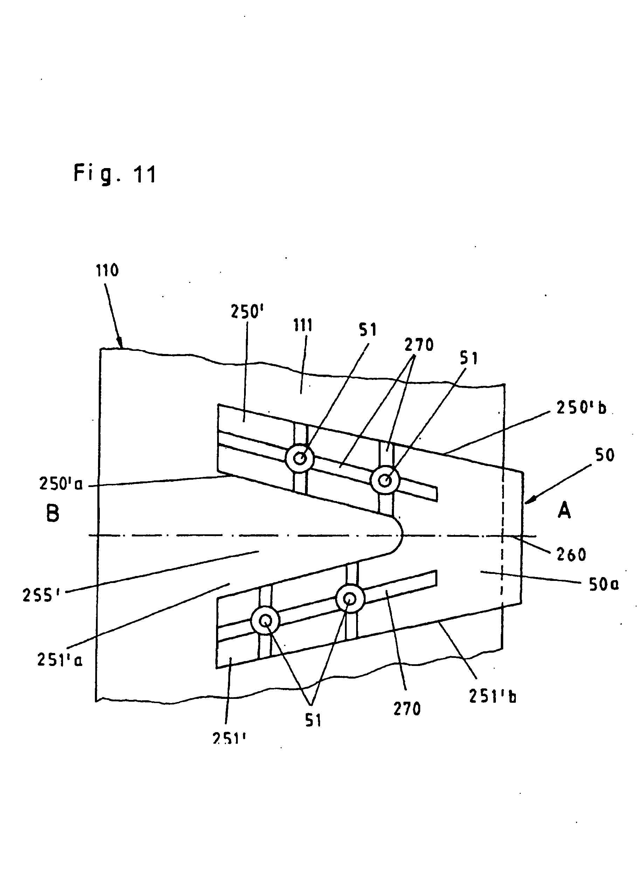

Bei der Ausführungsform nach Fig. 11 ist das auf der Reifenlauffläche 111 aufliegende Greifelement 50a am Ende des Greifelementträgers 50 ebenfalls gabelartig, d.h. V-förmig ausgebildet. Die beiden Schenkel 250', 251' des Greifelementes 50a sind dabei derart gespreizt, daß sie sich zur Innenseite des Rades in Richtung B hin erweitern, so daß ein etwa V-förmiger Zwischenraum 255' erhalten wird, wobei die äußeren Längsseitenkanten 250'b, 251'b und die einander zugekehrten inneren Längskanten 250'a, 251'a in etwa parallel zueinander verlaufen. Auch bei dieser Ausführungsform verlaufen die äußeren Längsseitenkanten 250'b, 251'b nicht parallel zu der Radachse 260. Mit dieser Ausgestaltung des Greifelementes 50a gemäß Fig. 10 und 11 wird eine Leistungserhöhung und ein sanfteres Abrollen erreicht.

Wie Fig. 10 und 11 ferner zeigen, sind die Oberflächen der Schenkel 250, 251 und 250', 251' des auf der Reifenlauffläche 111 aufliegenden Greifelementes 50a mit konturerhabenen Profilierungen 270 in Form von sich kreuzenden Profilstegen, wobei in den jeweiligen Kreuzungspunkten der Profilstege Spikes 51 angeformt sind.

## Patentansprüche

1. Gleitschutzvorrichtung, insbesondere für luftbereifte Fahrzeugräder für Eis- und Schneeflächen, die einseitig an dem Fahrzeugrad gehalten ist und die eine Anzahl von an einem Trägerelement (10) angeordneten, die Reifenlauffläche (111) teilweise übergreifenden, armartigen Greifelementträgern (50) mit an ihren freien Enden vorgesehenen Greifelementen (50a) aufweist, wobei für eine wechselseitige Schwenkbewegung der Greifelementträger (50) mit ihren Greifelementen (50a) um einen außerhalb des Mittelpunktes des Trägerelementes (10) liegenden Mittelpunkt an dem Trägerelement (10) eine der Anzahl der Greifelementträger (50) entsprechende Anzahl von Drehlagern (30) angeordnet ist, und wobei die Greifelementträger (50) um quer zur Mittelachse des Trägerelementes (10) verlaufende Schwenkachsen (59) zum Verschwenken der Greifelementträger (50) auf die Reifenlauffläche (111) verschwenkbar sind,
**dadurch gekennzeichnet,**
**daß** zur Anpassung der Gleitschutzvorrichtung an unterschiedliche Reifengrößen der Abstand des Befestigungspunktes (55) eines jeden Greifelementträgers (50) mit seinem Greifelement (50a) an dem Drehlager (30) zur Reifenlauffläche (111) durch Verdrehen des Drehlagers (30) veränderbar ist, wobei der Befestigungspunkt (55) für jeden Greifelementträger (50) an dem Drehlager (30) nach erfolgter Einstellung auf die Reifengröße feststellbar ist, wobei das Trägerelement (10) eine platten- oder ringförmige Formgebung aufweist und jedes Greifelement (50a) außenseitig Spikes (51) oder je zwei Greifelementträger miteinander verbindende Kettenabschnitte oder in Reifenumfangsrichtung auf der Reifenlauffläche (111) anliegende Kettenstränge von Kettennetzen aufweisen.

2. Gleitschutzvorrichtung nach Anspruch 1,
**dadurch gekennzeichnet,**
**daß** jedes Drehlager (30) eine oder mehrere außerhalb des Mittelpunktes des Trägerelementes (10) liegende Aufnahme(n) (20) aufweist zur Halterung des Greifelementträgers, so daß je nach Lage der Aufnahme (20) die Gleitschutzvorrichtung an unterschiedliche Reifengrößen anpaßbar ist.

3. Gleitschutzvorrichtung nach Ansprüche 2,
**dadurch gekennzeichnet,**
**daß** jedes Drehlager (30) auch eine zentrische Aufnahme (20') aufweist.

4. Gleitschutzvorrichtung nach einem der Ansprüche 1 bis 3,
**dadurch gekennzeichnet,**
**daß** jedes außerhalb des Mittelpunktes des Trägerelementes (10) liegende Drehlager (30) als kreisförmige haltescheibe ausgebildet ist.

5. Gleitschutzvorrichtung nach einem der vorhergehenden Ansprüche,
**dadurch gekennzeichnet,**
**daß** der Dreh- bzw. Verschwenkbereich eines jeden Drehlagers (30) seitlich begrenzt ist.

6. Gleitschutzvorrichtung nach Anspruch 5,
**dadurch gekennzeichnet,**
**daß** jede außerhalb des Mittelpunktes des Trägerelementes (10) liegende Haltescheibe (30) in einer Ausnehmung in dem Trägerelement (10) drehbar in die dem Drehlager (30) zugeordnete Ausnehmung (30') oder Durchbrechung in dem Trägerelement (10) bajonettartig eingesetzt ist.

7. Gleitschutzvorrichtung nach einem der Ansprüche 1 bis 6,
**dadurch gekennzeichnet,**
**daß** das Drehlager (30) und/oder das Trägerelement (10) und/oder der Greifelementträger (50) und/oder das Greifelement (50a) aus einem Kunststoff oder metallischen Werkstoffen besteht.

8. Gleitschutzvorrichtung nach einem der Ansprüche 1 bis 7,
**dadurch gekennzeichnet,**
**daß** die Greifelementträger (50) in die Halterungen der Drehlager (30) einsteckbar und aus der von dem Trägerelement (10) gebildeten Ebene verschwenkbar sind.

9. Gleitschutzvorrichtung nach einem der Ansprüche 4 bis 8,
**dadurch gekennzeichnet,**
**daß** jeder Greifelementträger (50) der Gleitschutzvorrichtung (100) mit dem Trägerelement (10) oder dem Ringkörper des ringförmig ausgebildeten Trägerelementes (10) lösbar verbunden ist, wobei jeder Greifelementträger (50) in seinem Befestigungspunkt (55) vermittels einer Steckverbindung (60) an der an oder in der Trägerelementfläche oder in der Ringfläche (11) des ringförmig ausgebildeten Trägerelementes (10) angeordneten, um eine senkrecht zu der Trägerelementfläche oder zu der Ringfläche (11) des Trägerelementes (10) stehende Achse (31) bei an dem Rad oder der Radfelge (120) befestigter Gleitschutzvorrichtung (100) verdrehbaren Haltescheibe (30) als Lager für die Greifelementträger (50) befestigt ist, die außermittig mindestens eine schlitzförmige Durchbrechung (20) zum Einführen und Befestigen des Greifelementträgers (50) mit seinem der Reifenlauffläche (111) abgekehrten Ende (50b) mittels der Steckverbindung (60) aufweist, so daß der Befestigungspunkt (55) eines jeden Greifelementträgers (50) an der verdrehbaren Haltescheibe (30) in radialer Richtung zu der Reifenlauffläche (111) zur Anpassung der Gleitschutzvorrichtung (100) an verschiedene Reifengrößen durch Verdrehen einer jeden Haltescheibe (30) lageveränderbar ausgebildet ist und eine reifenlaufflächennahe oder eine reifenlaufflächenferne Position einnimmt.

10. Gleitschutzvorrichtung nach einem der Ansprüche 4 bis 8,
**dadurch gekennzeichnet,**
**daß** jeder Greifelementträger (50) der Gleitschutzvorrichtung (100) lösbar mit dem Trägerelement (10) verbunden ist, wobei jeder Greifelementträger (50) in seinem Befestigungspunkt (55) vermittels einer Steckverbindung (60) an oder in der Trägerelementfläche oder an oder in der Ringfläche des ringförmig ausgebildeten Trägerelementes (10) angeordneten, um eine senkrecht zu der Trägerelementfläche oder Ringfläche (11) des ringförmig ausgebildeten Trägerelementes (10) stehende Achse (31) bei an dem Rad oder der Radfelge (120) befestigter Gleitschutzvorrichtung (100) verdrehbaren Haltescheibe (30) befestigt ist, die außermittig mindestens eine erste schlitzförmige Durchbrechung (20) und mittig eine parallel zu der außermittig angeordneten Durchbrechung (20) verlaufende zweite schlitzförmige Durchbrechung (20') zum Einführen des Greifelementträgers (50) mit seinem der Reifenlauffläche (111) abgekehrten Ende (50b) aufweist, so daß der Befestigungspunkt (55) eines jeden Greifelementträgers (50) in der ersten schlitzförmigen Durchbrechung (20) der verdrehbaren Haltescheibe (30) in radialer Richtung zu der Reifenlauffläche (111) zur Anpassung der Gleitschutzvorrichtung (100) an verschiedene Reifengrößen durch Verdrehen einer jeden Haltescheibe (30) in dem Trägerelement (10) lageveränderbar ausgebildet ist und eine reifenlaufflächennahe oder eine reifenlaufflächenferne Position einnimmt.

11. Gleitschutzvorrichtung nach Anspruch 9 oder 10,
**dadurch gekennzeichnet,**
**daß** das freie in der schlitzförmigen Durchbrechung (20; 20') der Haltescheibe (30) gehaltene Ende (50b) eines jeden Greifelementträgers (50) zum Herausklappen der Greifelementträger (50) aus der eingeklappten Nichtbetriebsstellung in die ausgeschwenkte Betriebsstellung und zum Einklappen aus dieser in die Nichtbetriebsstellung eine Z-förmige Profilausgestaltung (52) mit einem in einem rechten Winkel zu dem geradlinig verlaufenden Abschnitt (50c) des Greifelementträgers (50) abgebogenen ersten Endabschnitt (53) und mit einem in einem rechten Winkel zu dem ersten Endabschnitt (53) abgebogenen und parallel zu dem geradlinig verlaufenden Abschnitt (50c) verlaufenden zweiten Endabschnitt (54) aufweist, wobei der Greifelementträger (50) in seinem dem Trägerelement (10) zugekehrten Ende (50b) zwischen dem Trägerelement (10) und der Reifenseitenwandfläche (112) in die schlitzförmige Durchbrechung (20, 20') so eingeführt ist, daß sich der zweite Endabschnitt (54) der Z-förmigen Profilausgestaltung (52) des Endes (50b) des Greifelementträgers (50) auf der Außenwandfläche (11a) der Trägerelementfläche oder der Ringfläche (11) des Trägerelementes (10) oder auf der Außenwandfläche (30a) der verdrehbaren Haltescheibe (30) abstützt, wobei sich der Greifelementträger (50) im Übergangsbereich seines geradlinig verlaufenden Abschnittes (50c) mit dem ersten abgewinkelten Endabschnitt (53) der Z-förmigen Profilausgestaltung (52) des Endes (50b) des Greifelementträgers (50) an der dem Rand zugekehrten Wandfläche (11 b) des Trägerelementes (10) vermittels einer wulstartigen Abstützfläche (80) abstützt, die an der die schlitzförmige Durchbrechung (20) begrenzenden Wand (20a) vorgesehen ist.

12. Gleitschutzvorrichtung nach einem der Ansprüche 9 bis 11,
**dadurch gekennzeichnet,**
**daß** jede verdrehbare Haltescheibe (30) mit der schlitzförmigen Durchbrechung (20) bzw. den schlitzförmigen Durchbrechungen (20, 20') zur Halterung des Greifelementträgers (50) mit seinem Ende (50b) kreisförmig ausgebildet und in einer in der Trägerelementfläche oder der Ringfläche (11) des Trägerelementes (10) ausgebildeten kreisförmigen Durchbrechung (18) mittels Klemmsitz drehbar gehalten ist.

13. Gleitschutzvorrichtung nach Anspruch 12,
**dadurch gekennzeichnet,**
**daß** die umlaufende Wandfläche (32) einer jeden verdrehbaren Haltescheibe (30) für den Greifelementträger (50) als Ringnut (32) ausgebildet ist, in die die umlaufende Wand (18a) der die Haltescheibe (30) aufnehmende kreisförmige Durchbrechung (18) eingreift.

14. Gleitschutzvorrichtung nach einem der Ansprüche 9 bis 13,
**dadurch gekennzeichnet,**
**daß** jede verdrehbare Haltescheibe (30) mit in deren schlitzförmigen Durchbrechung (20) vermittels der Steckverbindung (60) gehaltenen Greifelementträgers (50) bei einem Verschwenken des Greifelementträgers (50) aus seiner radialen Reifenanlageposition um die senkrecht zu der Haltescheibe (30) stehende Mittelachse (31) der Haltescheibe (30) in eine seitliche Position selbsttätig in die Position zurückverschwenkbar ist, in der der Greifelementträger (50) seine radiale Anlageposition an dem Reifen einnimmt.

15. Gleitschutzvorrichtung nach Anspruch 14,
**dadurch gekennzeichnet,**
**daß** das Zurückverschwenken einer jeden verschwenkbaren Haltescheibe (30) mit ihrem Greifelementträger (50) um eine senkrecht zu dem Trägerelement (10) stehende Mittelachse (31) der Haltescheibe (30) in seine radiale Reifenanlageposition aus einer zu der Mittelachse (31) der Haltescheibe (30) verschwenkten Position vermittels Federkräfte erfolgt.

16. Gleitschutzvorrichtung nach einem der Ansprüche 9 bis 15,
**dadurch gekennzeichnet,**
**daß** die eine jede schlitzförmige Durchbrechung (20, 20') in der Trägerelementfläche oder in der Ringfläche (11) des Trägerelementes (10) oder in dem Schlitten (15) oder in der verdrehbaren Haltescheibe (30) für den Greifelementträger (50) begrenzenden Längsseitenkanten (21, 22) eine bogenförmige Wandausgestaltung als Schwenkhilfe für ein Heranklappen eines jeden Greifelementträgers (50) an das Trägerelement (10) um eine quer zur Längsachse eines jeden Greifelementträgers (50) verlaufende Schwenkachse (59) und für ein Herausschwenken des Greifelementträgers (50) in die Gebrauchsstellung zur Anlage an dem Reifen aufweisen.

17. Gleitschutzvorrichtung nach einem der Ansprüche 9 bis 16,
**dadurch gekennzeichnet,**
**daß** das dem Trägerelement (10) zugekehrte freie Ende (50b) eines jeden Greifelementträgers (50) zwei sich zu beiden Seiten der Seitenlängskanten (50d, 50e) des Greifelementträgers (50) erstrekkende Rastnocken (58, 58') aufweist, wobei die Länge von der äußeren Kante (58a) des einen Rastnockens (58) zu der äußeren Kante (58'a) des anderen Rastnockens (58') etwa größer bemessen ist als die Länge der schlitzförmigen Durchbrechung (20; 20') in dem Schlitten (15), der Ringfläche (11) des Trägerelementes (10) oder der verdrehbaren Haltescheibe (30) und daß die Länge des zweiten Endabschnittes (53) der Z-förmigen Profilausgestaltung (52) an dem Ende (50b) eines jeden Greifelementträgers (50) derart lang bemessen ist, daß bei einem Einklappen des Greifelementträgers (50) an die Innenseite des Trägerelementes (10) das freie Ende (50b) des Greifelementträgers (50) auf der Außenwandfläche (30a) der Haltescheibe (30) soweit gleitet, bis das freie Ende (50b) des Greifelementträgers (50) mit seinen Rastnocken (58, 58') an den Schmalseiten (23, 24) der den Greifelementträger (50) aufnehmenden schlitzförmigen Durchbrechung (20, 20') zur Anlage gebracht ist.

18. Gleitschutzvorrichtung nach einem der Ansprüche 9 bis 17,
**dadurch gekennzeichnet,**
**daß** die Haltescheibe (30) an der dem Rad oder der Felge zugekehrten Wandfläche mit einer Einziehung (70) zur Aufnahme der abgebogenen Abschnitte (53, 54) des Endes (50b) eines jeden Greifelementträgers (50) in eingeklappter Position der Greifelementträger (50) der Gleitschutzvorrichtung versehen ist.

19. Gleitschutzvorrichtung nach einem der vorhergehenden Ansprüche,
**dadurch gekennzeichnet,**
**daß** das auf der Reifenlauffläche (111) anliegende bzw. aufliegende Greifelement (50a) eines jeden Greifelementträgers (50) gabelartig bzw. V-förmig ausgebildet und zwei etwa parallel zueinander verlaufende Schenkel (250, 251) mit einem zwischen den Schenkeln liegenden U-förmigen Zwischenraum (255) aufweist, wobei die einander zugekehrten Längskanten (250a, 251a) der Schenkel (250, 251) parallel zueinander verlaufen und die äußeren Längsseitenkanten (250b, 251b) der Schenkel schräg verlaufend zu der Radachse (260) sind.

20. Gleitschutzvorrichtung nach einem der Ansprüche 1 bis 19,
**dadurch gekennzeichnet,**
**daß** das auf der Reifenlauffläche (111) anliegende bzw. aufliegende Greifelement (50a) eines jeden Greifelementträgers (50) gabelartig bzw. V-förmig ausgebildet ist, wobei die beiden Schenkel (250',251') des Greifelementes (50a) derart gespreizt ausgebildet sind, daß sie sich unter Ausbildung eines etwa V-förmigen Zwischenraumes (255') zur Innenseite des Rades hin konisch erweitern, so daß die Schenkel (250', 251') schräg zu der Radachse (260) verlaufend sind, wobei die äußeren Längsseitenkanten (250'b) 251'b) und die einander zugekehrten inneren Längskanten (250'a, 251'a) in etwa parallel zueinander verlaufen.

21. Gleitschutzvorrichtung nach einem der Ansprüche 19 und 20,
**dadurch gekennzeichnet,**
**daß** die äußeren Längsseitenkanten (250b, 251b) der Schenkel (250, 251) des Greifelementes (50a) parallel oder nach außen hin nach innen hin sich erweiternd verlaufen und daß die Oberflächen der Schenkel (250, 251; 250', 251') der auf der Reifenlauffläche (111) anliegenden Greifelementes (50a) konturenerhabene Profilierungen (270) mit sich kreuzenden Profilstegen aufweisen, wobei in den jeweiligen Kreuzungspunkten der Profilstege Spikes (51) angeordnet sind.

22. Gleitschutzvorrichtung nach einem der Ansprüche 4 bis 21,
**dadurch gekennzeichnet,**
**daß** die an dem Trägerelement (10) angeordneten Drehlager (30) zum Eingriff jeweiliger erster Enden (50b) der Greifelementträger (50) derart ausgebildet sind, daß der jeweilige Greifelementträger (50) in einer Ebene parallel zum Trägerelement um das Drehlager (30) herum drehbar oder um das Drehlager (30) um einen vorbestimmten Winkel verschwenkbar ist, wobei das drehbare Drehlager (30) mit einer lösbaren Verbindung für die Greifelementträger (50) ausgebildet ist.

23. Gleitschutzvorrichtung nach einem der vorhergehenden Ansprüche,
**dadurch gekennzeichnet,**
**daß** an der Trägerelementfläche oder an der Ringfläche (11) des Trägerelementes (10) angeordnete und um eine senkrecht zu der Trägerelementfläche oder zu der Ringfläche (11) des Trägerelementes (10) stehende Drehachse (31) drehbare Haltescheibe (30) eine Steckverbindung aufweist, wobei die Steckverbindung (60) drehfest mit dem Trägerelement (10) verbunden ist und daß die Steckverbindung eine symmetrisch zur Drehachse (31) der Haltescheibe (30) ausgebildeten Schlitz (20) aufweist.

24. Gleitschutzvorrichtung nach Anspruch 23,
**dadurch gekennzeichnet,**
**daß** das Trägerelement ein Stützring (10) ist und eine kreisförmige Durchbrechung (18) aufweist, in der die Haltescheibe (30) mittels eines Klemmsitzes drehbar gehaltert ist, wobei die Haltescheibe (30) eine umlaufende Ringnut (32) aufweist, welche in die Durchbrechung (18) eingreift.

25. Gleitschutzvorrichtung nach einem der vorhergehenden Ansprüche,
**dadurch gekennzeichnet,**
**daß** an jedem drehbaren Lager eine Vorrichtung zur Kraftbeaufschlagung desselben derart vorgesehen ist, daß bei Auslenkung eines jeweiligen Greifelementträgers (50) aus einer Reifenanlageposition um das Drehlager herum, die Vorrichtung zur Kraftbeaufschlagung eine rückstellende Kraft in Richtung der Reifenanlageposition ausübt und daß die Vorrichtung zur Kraftbeaufschlagung wenigstens eine Feder aufweist oder ein zwischen drehbarem Lager und Trägerelement (10) angeordnetes, elastisches Material aufweist.

## Claims

1. Anti-skid device, in particular for pneumatic-tyred wheels of vehicles for ice and snow surfaces, which is held on the wheel of the vehicle on one side and which exhibits a number of arm-type gripping element supports (50) arranged on a support element (10) and partially overlapping the tyre tread (111), with gripping elements (50a) provided at their free ends, wherein a number of pivot mountings (30) corresponding to the number of gripping element supports (50) is arranged on the support element (10) for an alternate swivelling movement of the gripping element supports (50) with their gripping elements (50a) in the circumferential direction of the support element about a middle point lying outside the middle point of the support element (10), and wherein the gripping element supports (50) can be swivelled about swivel axes (59) running transversely to the middle axis of the support element (10) to swivel the gripping element supports (50) on to the tyre tread (111),
**characterised in that** to adjust the anti-skid device to different tyre sizes the distance between the fixing point (55) of each gripping element support (50) with its gripping element (50a) to the pivot mounting (30) and the tyre tread (111) is adjustable by rotating the pivot mounting (30), wherein the fixing point (55) for each gripping element support (50) on the pivot mounting (30) can be locked after adjustment to the size of tyre, wherein the support element (10) exhibits a plate-shaped or ring-shaped configuration and on the outside each gripping element (50a) exhibits spikes (51) or chain sections each connecting two gripping element supports to one another or chain strands of chain nets bearing on the tyre tread (111) in the circumferential direction of the tyre.

2. Anti-skid device according to claim 1, **characterised in that** each pivot mounting (30) exhibits one or more recesses (20) lying outside the middle point of the support element (10) for retaining the gripping element support so that the anti-skid device can be adjusted to different sizes of tyre according to the position of the recess (20).

3. Anti-skid device according to claim 2, **characterised in that** each pivot mounting (30) also exhibits a central recess (20') .

4. Anti-skid device according to one of claims 1 to 3, **characterised in that** each pivot mounting (30) lying outside the middle point of the support element (10) takes the form of a circular holding disc.

5. Anti-skid device according to one of the preceding claims, **characterised in that** the pivoting or swivelling range of each pivot mounting (30) is limited laterally.

6. Anti-skid device according to claim 5, **characterised in that** each holding disc (30) lying outside the middle point of the support element (10) is inserted in the manner of a bayonet into the recess (30') or opening in the support element (10) associated with the pivot mounting (30) so as to be pivotable in a recess in the support element (10).

7. Anti-skid device according to one of claims 1 to 6, **characterised in that** the pivot mounting (30) and/or the support element (10) and/or the gripping element support (50) and/or the gripping element (50a) is made of a plastic or metallic materials.

8. Anti-skid device according to one of claims 1 to 7, **characterised in that** the gripping element supports (50) can be inserted into the retainers of the pivot mountings (30) and swivelled out of the plane formed by the support element (10).

9. Anti-skid device according to one of claims 4 to 8, **characterised in that** each gripping element support (50) of the anti-skid device (100) is connected detachably to the support element (10) or the ring of the ring-shaped support element (10), wherein each gripping element support (50) is fixed in its fixing point (55) by means of a plug-in connection (60) in the holding disc (30) which is arranged on or in the support element surface or in the ring surface (11) of the ring-shaped support element (10) and pivotable about an axis (31) standing perpendicularly to the support element surface or to the ring surface (11) of the support element (10) when the anti-skid device (100) is fixed to the wheel or the wheel rim (120) as a mounting for the gripping element supports (50) which exhibits eccentrically at least one slot-shaped opening (20) for introducing and fixing the gripping element support (50) by its end (50b) remote from the tyre tread (111) by means of the plug-in connection (60) so that the fixing point (55) of each gripping element support (50) in the rotatable holding disc (30) is formed so as to be adjustable in position in the radial direction relative to the tyre tread (111) to adjust the anti-skid device (100) to different sizes of tyre by rotating each holding disc (30) and adopts a position close to the tyre tread or a position remote from the tyre tread.

10. Anti-skid device according to one of claims 4 to 8, **characterised in that** each gripping element support (50) of the anti-skid device (100) is connected detachably to the support element (10), wherein each gripping element support (50) is fixed in its fixing point (55) by means of a plug-in connection (60) in the holding disc (30) which is arranged on or in the support element surface or on or in the ring surface of the ring-shaped support element (10) and pivotable about an axis (31) standing perpendicularly to the support element surface or ring surface (11) of the ring-shaped support element (10) when the anti-skid device (100) is fixed to the wheel or the wheel rim (120), which exhibits eccentrically at least one first slot-shaped opening (20) and centrally a second slot-shaped opening (20') running parallel to the off-centre opening (20) for introducing the gripping element support (50) by its end (50b) remote from the tyre tread (111) so that the fixing point (55) of each gripping element support (50) in the first slot-shaped opening (20) of the rotatable holding disc (30) is formed so as to be adjustable in position in the radial direction relative to the tyre tread (111) to adjust the anti-skid device (100) to different sizes of tyre by rotating each holding disc (30) in the support element (10) and adopts a position close to the tyre tread or a position remote from the tyre tread.

11. Anti-skid device according to claim 9 or 10, **characterised in that** the free end (50b) of each gripping element support (50) held in the slot-shaped opening (20; 20') of the holding disc (30) exhibits a Z-shaped profile (52) with a first end portion (53) bent at a right angle to the portion (50c) of the gripping element support (50) running in a straight line and with a second end portion (54) bent at a right angle to the first end portion (53) and running parallel to the portion (50c) running in a straight line for swinging the gripping element supports (50) out of the retracted inoperative position into the extended operative position and for retracting these from the latter into the inoperative position, wherein the gripping element support (50) is introduced by its end (50b) facing the support element (10) between the support element (10) and the tyre side wall (112) into the slot-shaped opening (20, 20') so that the second end portion (54) of the Z-shaped profile (52) of the end (50b) of the gripping element support (50) is supported on the external wall surface (30a) of the rotatable holding disc (30), wherein the gripping element support (50) in the transitional area of its portion (50c) running in a straight line with the first angled end portion (53) of the Z-shaped profile (52) of the end (50b) of the gripping element support (50) is supported on the wall surface (11b) facing the edge of the support element (10) by means of a bead-like supporting surface (80) which is provided on the wall (20a) bounding the slot-shaped opening (20).

12. Anti-skid device according to one of claims 9 to 11, **characterised in that** each rotatable holding disc (30) with the slot-shaped opening (20) or the slot-shaped openings (20, 20') to hold the gripping element support (50) by its end (50b) is circular and is held in a circular opening (18) formed in the support element surface or the ring surface (11) of the support element (10) by means of a clamping fit so as to be rotatable.

13. Anti-skid device according to claim 12, **characterised in that** the circumferential wall surface (32) of each rotatable holding disc (30) for the gripping element support (50) is formed as an annular groove (32) into which engages the circumferential wall (18a) of the circular opening (18) receiving the holding disc (30).

14. Anti-skid device according to one of claims 9 to 13, **characterised in that** each rotatable holding disc (30) with the gripping element support (50) held in its slot-shaped opening (20) by means of the plug-in connection (60) when the gripping element support (50) is swivelled out of its radial position bearing on the tyre about the central axis (31) of the holding disc (30) standing perpendicularly to the holding disc (30) into a lateral position can automatically be swivelled back into the position in which the gripping element support (50) adopts its radial position bearing on the tyre.

15. Anti-skid device according to claim 14, **characterised in that** each pivotable holding disc (30) with its gripping element support (50) is swivelled back about a central axis (31) of the holding disc (30) standing perpendicularly to the support element (10) into its radial position bearing on the tyre from a position in which it is swivelled relative to the central axis (31) of the holding disc (30) by means of spring forces.

16. Anti-skid device according to one of claims 9 to 15, **characterised in that** the longitudinal side edges (21, 22) bounding each slot-shaped opening (20, 20') in the support element surface in the pivotable holding disc (30) for the gripping element support (50) exhibit a curved wall configuration as a swivelling aid to swivel each gripping element support (50) against the support element (10) about a swivel axis (59) running transversely to the longitudinal axis of each gripping element support (50) and for swinging out the gripping element support (50) into the position for use bearing on the tyre.

17. Anti-skid device according to one of claims 9 to 16, **characterised in that** the free end (50b) of each gripping element support (50) facing the support element (10) exhibits two detent cams (58, 58') extending on both sides of the longitudinal side edges (50d, 50e) of the gripping element support (50), wherein the length from the outer edge (58a) of one detent cam (58) to the outer edge (58'a) of the other detent cam (58') is somewhat greater than the length of the slot-shaped opening (20; 20') of the pivotable holding disc (30), and **in that** the length of the second end portion (53) of the Z-shaped profile (52) at the end (50b) of each gripping element support (50) is such that when the gripping element support (50) is swung in against the inside of the support element (10), the free end (50b) of the gripping element support (50) slides on the outside wall surface (30a) of the holding disc (30) until the free end (50b) of the gripping element support (50) is brought to bear with its detent cams (58, 58') on the narrow sides (23, 24) of the slot-shaped opening (20, 20') receiving the gripping element support (50).

18. Anti-skid device according to one of claims 9 to 17, **characterised in that** on the wall surface facing the wheel or the rim the holding disc (30) is provided with a recess (70) to receive the bent portions (53, 54) of the end (50b) of each gripping element support (50) when the gripping element supports (50) of the anti-skid device are in the swung-in position.

19. Anti-skid device according to one of the preceding claims, **characterised in that** the gripping element (50a) of each gripping element support (50) bearing or resting on the tyre tread (111) is fork-shaped or V-shaped and exhibits two limbs (250, 251) running roughly parallel with one another with a U-shaped intermediate space (255) lying between the limbs, wherein the facing longitudinal edges (250a, 251a) of the limbs (250, 251) run parallel with one another and the outer longitudinal side edges (250b, 251b) of the limbs run at an oblique angle to the wheel axis (260).

20. Anti-skid device according to one of claims 1 to 19, **characterised in that** the gripping element (50a) of each gripping element support (50) bearing or resting on the tyre tread (111) is fork-shaped or V-shaped, wherein the two limbs (250', 251') of the gripping element (50a) are spread so that they widen conically towards the inside of the wheel forming a roughly V-shaped intermediate space (255') so that the limbs (250', 251') run at an oblique angle to the wheel axis (260), wherein the outer longitudinal edges (250'b, 251'b) and the facing inner longitudinal edges (250'a, 251'a) run roughly parallel to one another.

21. Anti-skid device according to one of claims 19 and 20, **characterised in that** the outer longitudinal side edges (250b, 251b) of the limbs (250, 251) of the gripping element (50a) run parallel or towards the outside and widen towards the inside and **in that** the surfaces of the limbs (250, 251; 250', 251') of the gripping element (50a) bearing on the tyre tread (111) exhibit profiles (270) with raised contours with intersecting profile webs, wherein spikes (51) are arranged in the respective intersection points of the profile webs.

22. Anti-skid device according to one of claims 4 to 21, **characterised in that** the pivot mountings (30) arranged on the support element (10) for engagement of the respective first ends (50b) of the gripping element supports (50) are designed such that the respective gripping element support (50) is pivotable about the pivot mounting (30) or swivellable about the pivot mounting (30) by a predetermined angle in a plane parallel to the support element, wherein the pivot mounting (30) is embodied with a detachable connection for the gripping element supports (50).

23. Anti-skid device according to one of the preceding claims, **characterised in that** the holding disc (30) which is arranged on the support element surface or on the ring surface (11) of the support element (10) and is pivotable about a pivot axis (31) standing perpendicularly to the support element surface or to the ring surface (11) of the support element (10) exhibits a plug-in connection, wherein the plug-in connection (60) is connected to the support element (10) so that it is fixed in rotation, and **in that** the plug-in connection exhibits a slot (20) which is formed symmetrically in relation to the pivot axis (31) of the holding disc (30).

24. Anti-skid device according to claim 23, **characterised in that** the support element is a supporting ring (10) and exhibits a circular opening (18) in which the holding disc (30) is mounted rotatably by means of a clamping fit, wherein the holding disc (30) exhibits a circumferential ring-shaped groove (32) which engages in the opening (18).

25. Anti-skid device according to one of the preceding claims, **characterised in that** on each pivot mounting (30) there is a device for applying a force to the same in such a way that when a respective gripping element support (50) is deflected from a position bearing on the tyre about the pivot mounting, the device for applying a force exerts a restoring force in the direction of the position bearing on the tyre, and **in that** the device for applying a force exhibits at least one spring or exhibits an elastic material arranged between the pivotable mounting and the support element (10).

## Revendications

1. Dispositif antidérapant, en particulier pour roues de véhicules montées sur pneus pour des surfaces verglacées et enneigées, qui est monté d'un côté sur la roue du véhicule et qui présente un nombre de supports d'éléments de prise du type bras (50) placés sur un élément de support (10), recouvrant partiellement la chape du pneu (111), avec des éléments de prise (50a) prévus à leurs extrémités libres, un nombre de coussinets de pivotement (30) correspondant au nombre de supports d'éléments de prise (50) étant placé sur l'élément de support (10) pour un mouvement de pivotement alterné des supports d'éléments de prise (50) avec leurs éléments de prise (50a) en direction périphérique des éléments de supports autour d'un centre situé à l'extérieur du centre de l'élément de support (10), et les supports d'éléments de prise (50) étant pivotants autour d'axes de pivotement (59) transversaux par rapport à l'axe central de l'élément de support (10) pour faire pivoter les supports d'éléments de prise (50) sur la chape du pneu (111),
**caractérisé en ce que**
pour adapter le dispositif antidérapant à différentes tailles de pneu, la distance du point de fixation (55) de chaque support d'éléments de prise (50) avec son élément de prise (50a) sur le coussinet (30) peut être modifiée par rapport à la chape du pneu (111) en tournant le coussinet de pivotement (30), et le point de fixation (55) pour chaque support d'élément de prise (50) peut être bloqué, sur le coussinet de pivotement (30) dès que le réglage à la grandeur du pneu a été fait, l'élément de support (10) ayant une configuration en forme de plaque ou d'anneau et chaque élément de prise (50a) ayant sur le côté extérieur, des clous (51) ou des sections de chaîne qui relient respectivement deux supports d'éléments de prise l'un à l'autre ou des tronçons de réseaux de chaîne reposant dans le sens de la circonférence du pneu sur la chape du pneu (111).

2. Dispositif antidérapant selon la revendication 1,
**caractérisé en ce qu'**
chaque coussinet de pivotement (30) présente un ou plusieurs logements (20) situés à l'extérieur du centre de l'élément de support (10) pour le maintien du support d'élément de prise si bien que, selon la position des logements (20), le dispositif antidérapant peut être adapté à différentes tailles de pneus.

3. Dispositif antidérapant selon la revendication 2,
**caractérisé en ce que**
chaque coussinet de pivotement (30) présente aussi un logemetn (20') centré.

4. Dispositif antidérapant selon l'une des revendications 1 à 3,
**caractérisé en ce que**
chaque coussinet de pivotement (30) situé à l'extérieur du centre de l'élément de support (10) est un disque de retenue circulaire et la zone de rotation ou de pivotement de chacun des coussinets de pivotement (30) est délimitée latéralement.

5. Dispositif antidérapant selon l'une des revendications précédentes,
**caractérisé en ce que**
la zone de rotation ou de pivotement de chacun des coussinets de pivotement (30) est délimitée latéralement

6. Dispositif antidérapant selon la revendication 5,
**caractérisé en ce que**
chaque coussinet de pivotement (30) situé à l'extérieur du centre de l'élément de support (10) est inséré rotatif dans un creux dans l'élément de support (10) ou à la manière d'une baïonnette dans le creux (30') ou dans le passage de l'élément de support (10), associé au coussinet de pivotement (30).

7. Dispositif antidérapant selon l'une des revendications 1 à 6,
**caractérisé en ce que**
le coussinet de pivotement (30) et/ou l'élément de support (10) et/ou le support d'élément de prise (50) et/ou l'élément de prise (50a) est en une matière synthétique ou en matériaux métalliques.

8. Dispositif antidérapant selon l'une des revendications 1 à 7,
**caractérisé en ce que**
les supports d'élément de prise (50) peuvent être emboîtés dans les supports des coussinets de pivotement (30) et peuvent pivoter à partir du plan formé par l'élément de support (10).

9. Dispositif antidérapant selon l'une des revendications 4 à 8,
**caractérisé en ce que**
chaque support d'élément de prise (50) du dispositif antidérapant (100) est relié de manière amovible à l'élément de support (10) ou au corps annulaire de l'élément de support (10) de forme annulaire, chaque support d'élément de prise (50) ayant son point de fixation (55) fixé au moyen d'un raccord d'emboîtement (60) sur un disque de retenue (30), placé sur ou dans la surface de l'élément de support ou dans la surface annulaire (11) de l'élément de support (10) en forme d'anneau, et rotatif autour d'un axe (31) perpendiculaire à la surface de l'élément de support ou à la surface annulaire (11) de l'élément de support (10), le dispositif antidérapant (100) étant fixé à la roue ou à l'essieu (120), ce disque de retenue servant de palier pour les supports d'éléments de prise (50) et présentant de manière excentrée au moins une découpe en forme de fente (20) pour introduire et fixer le support d'élément de prise (50) avec son extrémité (50b) détournée de la chape du pneu (111) au moyen du raccord d'emboîtement (60), si bien que le point de fixation (55) de chaque support d'élément de prise (50) sur le disque de retenue (30) rotatif est variable en position dans le sens radial par rapport à la chape du pneu (111) pour adapter le dispositif antidérapant (100) à différentes tailles de pneu en tournant chaque disque de retenue (30), et prend une position proche ou éloignée de la chape du pneu.

10. Dispositif antidérapant selon l'une des revendications 4 à 8,
**caractérisé en ce que**
chaque support d'élément de prise (50) du dispositif antidérapant (100) est relié de manière amovible à l'élément de support (10), chaque support d'élément de prise (50) étant fixé à son point de fixation (55) au moyen d'un raccord d'emboîtement (60) sur un disque de retenue (30), placé sur ou dans la surface de l'élément de support ou sur ou dans la surface annulaire (11) de l'élément de support configuré en forme d'anneau (10), et rotatif autour d'un axe (31) perpendiculaire à la surface de l'élément de support ou à la surface annulaire (11) de l'élément de support en forme d'anneau (10), le dispositif antidérapant (100) étant fixé à la roue ou à l'essieu (120), ce disque de retenue présentant de manière excentrée au moins une première découpe en forme de fente (20) et au milieu une seconde découpe en forme de fente (20'), parallèle à la découpe excentrée (20), pour introduire le support d'élément de prise (50) avec son extrémité (50b) détournée de la chape du pneu (111), si bien que que le point de fixation (55) de chaque support d'élément de prise (50) dans la première découpe en forme de fente (20) du disque de retenue rotatif (30) est variable en position dans l'élément de support (10) dans le sens radial par rapport à la chape du pneu (111) pour adapter le dispositif antidérapant (100) à différentes tailles de pneu en tournant chaque disque de retenue (30), et prend une position proche ou éloignée de la chape du pneu.

11. Dispositif antidérapant selon l'une des revendications 9 ou 10,
**caractérisé en ce que**
l'extrémité libre (50b) de chaque support d'élément de prise (50), maintenue dans la découpe en forme de fente (20 ; 20'), présente,
pour faire sortir les supports d'élément de prise (50) de la position repliée de non fonctionnement dans la position de fonctionnement sortie par pivotement, et pour rentrer de cette position dans la position de non fonctionnement, une configuration de profilé en forme de Z (52) avec une première section d'extrémité (53) recourbée en angle droit par rapport à la section en ligne droite (50c) du support d'élément de prise (50), et avec une seconde section d'extrémité (54) recourbée en angle droit par rapport à la première section d'extrémité (53) et parallèle à la section en ligne droite (50c), et le support d'élément de prise (50) dans son extrémité (50b) tournée vers l'élément de support (10) est introduit entre l'élément de support (10) et la surface de l'épaulement du pneu (112) dans la découpe en forme de fente (20, 20') de telle manière que la seconde section d'extrémité (54) de la configuration de profilé en forme de Z (52) de l'extrémité (50b) du support d'élément de prise (50) repose sur la surface de paroi extérieure (30a) du disque de retenue (30) rotatif, le support d'élément de prise (50) s'appuyant, dans la zone de transition de sa section en ligne droite (50c), avec la première section d'extrémité coudée (53) de la configuration de profilé en forme de Z (52) de l'extrémité (50b) du support d'élément de prise (50) sur la surface de paroi (11b) de l'élément de support (10) qui est tournée vers le bord au moyen d'une surface d'appui de type bourrelet (80) qui est prévue sur la paroi (20a) qui délimite la découpe en forme de fente (20).

12. Dispositif antidérapant selon l'une des revendications 9 à 11,
**caractérisé en ce que**
chaque disque de retenue rotatif (30) avec la découpe en forme de fente (20) ou les découpes en forme de fente (20, 20') pour le maintien du support d'élément de prise (50) avec son extrémité (50b) est circulaire, et est maintenu rotatif par ajustement serré dans une découpe circulaire (18) dans la surface de l'élément de support ou dans la surface annulaire (11) de l'élément de support (10).

13. Dispositif antidérapant selon la revendication 12,
**caractérisé en ce que**
la surface de la paroi périphérique (32) de chaque disque de retenue rotatif (30) pour le support d'élément de prise (50) est une rainure annulaire (32) dans laquelle s'engrène la paroi périphérique (18a) de la découpe circulaire (18) qui reçoit le disque de retenue (30).

14. Dispositif antidérapant selon l'une des revendications 9 à 13,
**caractérisé en ce que**
chaque disque de retenue rotatif (30) avec un support d'élément de prise (50) maintenu dans sa découpe en forme de fente (20) au moyen du raccord d'emboîtement (60) peut, lors d'un pivotement du support d'élément de prise (50) à partir de sa position d'appui radial sur le pneu autour de l'axe central (31) du disque de retenue (30) qui est perpendiculaire au disque de retenue (30) dans une position latérale, repivoter automatiquement dans la position dans laquelle le support d'élément de prise (50) prend sa position d'appui radial sur le pneu.

15. Dispositif antidérapant selon la revendication 14,
**caractérisé en ce que**
le repivotement dans sa position d'appui radial de chaque disque de retenue rotatif (30) avec son support d'élément de prise (50), se fait au moyen de forces élastiques autour d'un axe central (31) du disque de retenue (30) qui est perpendiculaire à l'élément de support (10), à partir d'une position pivotée vers l'axe central (31) du disque de retenue (30).

16. Dispositif antidérapant selon l'une des revendications 9 à 15,
**caractérisé en ce que**
les arêtes des côtés longitudinaux (21, 22) qui délimitent chaque découpe en forme de fente (20, 20') dans la surface de l'élément de support dans le disque de retenue rotatif (30) pour le support d'élément de prise (50) présentent une configuration de paroi arquée comme aide au pivotement pour rabattre chaque support d'élément de prise (50) contre l'élément de support (10) autour d'un axe de pivotement (59) transversal par rapport à l'axe longitudinal de chaque support d'élément de prise (50) et pour un déploiement par pivotement du support d'élément de prise (50) dans la position d'utilisation pour le contact sur le pneu.

17. Dispositif antidérapant selon l'une des revendications 9 à 26,
**caractérisé en ce que**
l'extrémité libre (50b) de chaque support d'élément de prise (50) qui est tournée vers l'élément de support (10) présente deux ergots d'encliquetage (58, 58') qui s'étendent des deux côtés des arêtes des côtés longitudinaux (50d, 50e) du support de prise (50), la longueur de l'arête extérieure (58a) de l'un des ergots d'encliquetage (58) par rapport à l'arête extérieure (58'a) de l'autre ergot d'encliquetage (58') étant dimensionnée un peu plus grande que la longueur de la découpe en forme de fente (20 ; 20') dans le coulisseau (15), la surface annulaire (11) de l'élément de support (10) ou le disque de retenue pouvant effectuer une torsion (30), et la longueur de la seconde section d'extrémité (53) de la configuration de profilé en forme de Z (52) à l'extrémité (50b) de chaque support d'élément de prise (50) est dimensionnée de telle longueur que, lors d'un rabattement du support d'élément de prise (50) contre le côté intérieur de l'élément de support (10), l'extrémité libre (50b) du support d'élément de prise (50) glisse sur la surface de la paroi extérieure (30a) du disque de retenue (30) jusqu'à ce que l'extrémité libre (50b) du support d'élément de prise (50) vienne se poser avec ses ergots d'encliquetage (58, 58') contre les petits côtés (23, 24) de la découpe en forme de fente (20, 20') qui reçoit le support d'élément de prise (50).

18. Dispositif antidérapant selon l'une des revendications 9 à 17,
**caractérisé en ce que**
le disque de retenue (30) est pourvu, sur la surface de paroi tournée vers la roue ou la jante, d'un renfoncement (70) pour loger les sections recourbées (53, 54) de l'extrémité (50b) de chaque support d'élément de prise (50) dans la position repliée des supports d'élément de prise (50) du dispositif antidérapant.

19. Dispositif antidérapant selon l'une des revendications précédentes,
**caractérisé en ce que**
l'élément de prise (50a) de chaque support d'élément de prise (50) qui est adjacent ou qui repose sur la chape du pneu (111) est configuré en forme de fourche ou de V et présente deux montants (250, 251) approximativement parallèles avec un espace intermédiaire en forme d'U (255) situé entre les montants, les arêtes longitudinales (250a, 251a) tournées l'une vers l'autre des montants (250, 251) étant parallèles l'une à l'autre et les arêtes longitudinales extérieures (250b, 251b) des montants étant en biais vers l'essieu (260).

20. Dispositif antidérapant selon l'une des revendications 1 à 27,
**caractérisé en ce que**
l'élément de prise (50a) de chaque support d'élément de prise (50) qui est en contact ou qui repose sur la chape (111) est configuré en forme de fourche ou de V, les deux montants (250', 251') de l'élément de prise (50a) étant configurés écartés de telle manière qu'ils s'élargissent en cône vers le côté intérieur de la roue en formant un espace intermédiaire approximativement en forme de V (255'), si bien que les montants sont en biais vers l'essieu (260), les arêtes extérieures des côtés longitudinaux (250'b, 251'b) approximativement parallèles aux arêtes longitudinales intérieures (250'a, 251'a) tournées l'une vers l'autre.

21. Dispositif antidérapant selon l'une des revendications 19 et 20,
**caractérisé en ce que**
les arêtes des côtés longitudinaux (250b, 251b) des montants (250, 251) de l'élément de prise (50a) sont parallèles ou s'élargissent vers l'extérieur vers l'intérieur, et les surfaces des montants (250, 251 ; 250', 251') de l'élément de prise (50a) reposant sur la chape du pneu (111) présentent des profilés aux contours accentués (270) avec des barrettes de profil qui se croisent, des clous (51) étant placés dans les points de croisement respectifs des barrettes de profil.

22. Dispositif antidérapant selon l'une des revendications 4 à 21,
**caractérisé en ce que**
les coussinets de pivotements (30) placés sur l'élément de support (10) sont configurés pour l'engrènement des premières extrémités respectives (50b) des supports d'élément de prise (50) de telle manière que le support d'élément de prise respectif (50) est rotatif autour du coussinet (30) dans un plan parallèlement à l'élément de support, ou est pivotant d'un angle prédéfini autour du coussinet (30) rotatif configuré avec une jonction amovible pour les supports d'élément de prise (50).

23. Dispositif antidérapant selon l'une des revendications précédentes,
**caractérisé en ce qu'**
un disque de retenue (30) placé sur la surface de l'élément de support ou sur la surface annulaire (11) de l'élément de support (10) et rotatif autour d'un axe de rotation (31) perpendiculaire à la surface de l'élément de support ou à la surface annulaire (11) de l'élément de support (10), présente un raccord d'emboîtement, présente un raccord d'emboîtement (60) étant solidaire en rotation avec l'élément de support (10), et le raccord d'emboîtement présente une fente (20) symétrique par rapport à l'axe de rotation (31) du disque de retenue (30).

24. Dispositif antidérapant selon la revendication 23,
**caractérisé en ce que**
l'élément de support est un anneau d'appui (10) présentant une découpe circulaire (18) dans laquelle le disque de retenue (30) est maintenu rotatif au moyen d'un ajustement serré, le disque de retenue (30) présentant une rainure annulaire périphérique (32) qui s'engrène dans la découpe (18).

25. Dispositif antidérapant selon l'une des revendications précédentes,
**caractérisé en ce qu'**
un dispositif est prévu sur chaque coussinet de pivotement (30) pour exercer une force sur celui-ci de telle manière que, lors d'une excursion d'un support d'élément de prise respectif (50) à partir d'une position de contact sur le pneu autour du coussinet, le dispositif pour exercer une force exerce une force de rappel en direction de la position de contact sur le pneu, et le dispositif pour exercer une force présente au moins un ressort ou un matériau élastique placé entre le coussinet rotatif et l'élément de support (10).
